# EUROPEAN PATENT SPECIFICATION

(11) **EP 3 763 502 B1**
(45) Date of publication and mention of the grant of the patent: **22.06.2022**
(21) Application number: 20185246.4
(22) Date of filing: 10.07.2020
(51) Int. Cl.: B29C 44/42

(54) **APPARATUS AND METHOD FOR FOAMING REFRIGERATOR CABINETS**
VORRICHTUNG UND VERFAHREN ZUM VERSCHÄUMEN VON KÜHLSCHRÄNKEN
APPAREIL ET PROCÉDÉ POUR RÉALISER LE MOUSSAGE DE CABINES RÉFRIGÉRANTES

(30) Priority: 12.07.2019 IT 201900011679
(43) Date of publication of application: 13.01.2021
(73) Proprietor: Cannon Ergos S.P.A., 20121 Milan (IT)
(72) Inventor: Volpato, Marco, 20121 Milan (IT); Orlandini, Andrea, 20121 Milano (IT); De Rossi, Claudio, 20121 Milan (IT)
(74) Representative: Candito, Rocco

(56) References cited:
- EP-A1- 3 278 949
- KR-A- 20120 083 194
- RU-U1- 182 592

## Description

### BACKGROUND OF THE INVENTION

The present invention relates to an apparatus and method for foaming refrigerator cabinets, freezers and the like by using a polyurethane reactive mixture.

### STATE OF THE ART

Different systems are known for foaming refrigerator cabinets. Generally, the refrigerator cabinet comprises an outer shell and an inner shell that together define the hollow walls of the cabinet, inside which a polyurethane reactive mixture has to be injected. The mixture, composed by a polyol and an isocyanate, expands and polymerizes to generate stiff foam that insulates the refrigerator cabinet thermally.

In order to enable the mixture to be injected and ensure correct expansion and polymerization thereof inside the aforesaid hollow walls, it is necessary to place the refrigerator cabinet inside a so-called "foaming jig", which is defined by pairs of contrast walls configured to come to rest on and conform to the respective walls of the refrigerator cabinet. The contrast walls of the "foaming jig" have the function of counteracting the thrust generated by the reactive mixture, in order to maintain the correct geometry of the cabinet. Similarly, the thrust acting on the inner shell of the cabinet is counteracted by a suitable male contrasting element that is geometrically shaped to engage with, and fill, the inner cavities of the refrigerator cabinet.

In many known apparatuses, the foaming jig generally comprises a lower support portion for the refrigerator cabinet, permanently fixed to a lifting device, and an upper portion is provided that bears the male contrasting element and is permanently fixed to the structure of the foaming plant. In this type of plant, thus, the refrigerator cabinet is positioned with the inlet of the cavity thereof facing upwards, or "face-up", and the reactive mixture is injected by a horizontally arranged mixing head that penetrates, from the side intended to house the compressor, through a suitable through injection hole that traverses the respective contrast wall and continues, correspondingly on the lower zone of the affected hollow wall of the refrigerator cabinet. For "face-up" foaming, which is very widely used in Europe and the United States, where there are no particular constraints on the dimensional standards of refrigerators, it is necessary to use mixtures with reaction speeds that are not too high, otherwise it is difficult to obtain correct and total filling of the gap between the outer shell and inner shell of the cabinet.

Examples of an apparatus for foaming refrigerator cabinets are known from WO2010/094715, WO2006/13002, US4.664.614, US8.894.402.

Other apparatuses are known from EP3278949, KR20120083194, and RU182592U1.

In other geographical areas of the world, like for example in Japan, where the dimensional requirements and volume-saving are more felt, it is fundamental to maximize the insulating power of the foam inside the refrigerator cabinets, by adopting mixtures having chemical formulations with high reaction speeds (e.g. a gel time of 20-30 sec.. in order to obtain, in polymerization, cells of reduced dimensions, with a high degree of thermal insulation). Owing to the high reaction speed of the mixture, using just one mixing head is not sufficient to ensure correct filling of the gap in the required time, this thus makes it necessary to use several mixing heads simultaneously, in order to minimize the distances that the various injection flows have to cover. For this purpose, the only concrete possibility to ensure an even distribution of the injection flows is to inject the various mixture flows into the rear wall of the refrigerator cabinet, i.e. the wall that, during normal use of the refrigerator, acts as a backrest, thus opposite the door side. Multiple and simultaneous injection is thus practicable by arranging the refrigerator cabinet in the "face-down" position, i.e. with the cavity facing downwards.

Different apparatuses are known for "face-down" foaming of refrigerator cabinets but none of them has proved to be satisfactory from the point of view of performance, in particular in terms of production speed, cycle times, flexibility, etc... More precisely, a first type of apparatus, of the drum type, provides for the refrigerator cabinet, initially in the "face-up" position, being taken to a zone placed below the drum, where it is rested on a table constrained to the structure that supports the drum and is movable only in a vertical direction between a lower loading/unloading position and an upper position in which the refrigerator cabinet is enclosed in the respective foaming jig.

Once the foaming jig is closed, the drum is rotated so as to take the jig, containing the cabinet to be foamed, to the upper angular position in which the latter reaches the "face- down" position. Only at this point can the mixture be injected.

The inevitable expenditure of time is clear to load the cabinet into the foaming jig, rotate the drum by 180° to be able to start injecting and at the end of foaming rotate again the drum to return the jig to the unloading position. Further, the stroke for lifting/lowering the aforesaid table is rather long, because it is necessary, during the unloading step, to ensure the total disengagement of the refrigerator cabinet from the contrast walls that are supported from above on the structure of the apparatus, this further increasing productive cycle time. In other words, the lifting/lowering stroke has to be greater than the height of the contrast walls, which extend vertically, to enable the refrigerator cabinet to engage completely with and disengage completely from the foaming jig.

Another limit of known foaming apparatuses, both of the first type and of the second type disclosed above, is due to the fact that they do not enable an operator to access easily the various parts that make up the foaming jig, for example for adjusting, setting, cleaning interventions or other tasks.

In the light of what has been set out above, there is ample room for improvements to refrigerator cabinet foaming plants.

### OBJECTS OF THE INVENTION

One object of the present invention is to improve current systems for foaming refrigerator cabinets.

Another object is to provide a new and different solution that enables the entire process of foaming refrigerator cabinets and the like to be made easier and faster, including both the operations of insertion and removal and the operation of filling with the mixture that constitutes the foam, significantly reducing the cycle times, thus achieving a general improvement of productivity.

Another object is to provide a technical solution that makes the adjustment of a foaming jig easier to adapt to refrigerator cabinet sizes and geometries that are different each time.

Another object is to provide an apparatus that enables the various parts of the foaming jig to be reached and accessed easily to permit various operations of maintenance, adjustment, model changing, cleaning, etc.

A further object is to provide a system that enables the reactive mixture to be poured and the cavity to be foamed according to programmable positions or paths in a flexible manner to optimize filling and distribution of the insulating foam.

### SHORT DESCRIPTION OF THE INVENTION

These objects and other advantages of the invention are achievable by an apparatus and a method for foaming refrigerator cabinets and freezers according to what is defined in the attached claims.

Further features and advantages will be clear from the following description with the help of the attached drawings that show an exemplary and non-limiting form of implementation of the foaming apparatus according to the invention.

### SHORT DESCRIPTION OF THE DRAWINGS

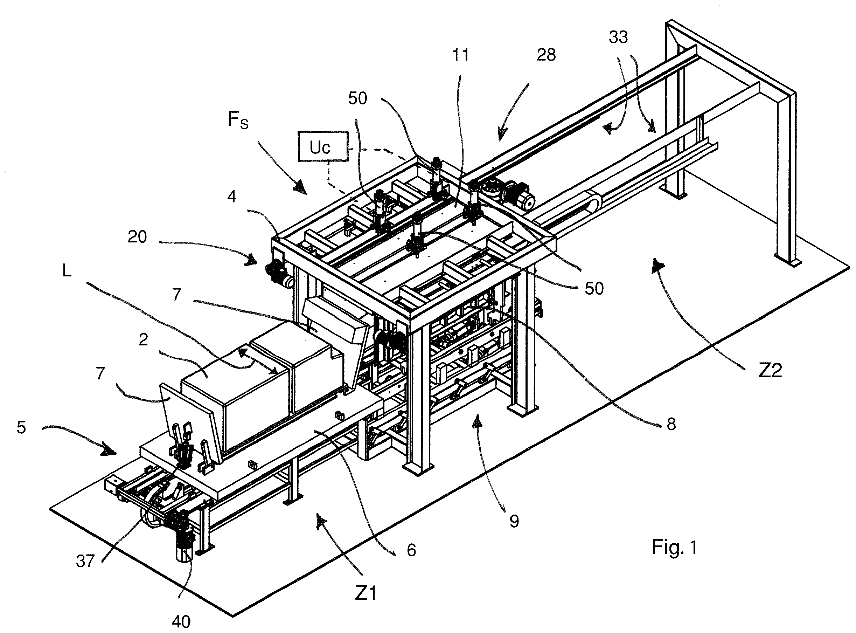

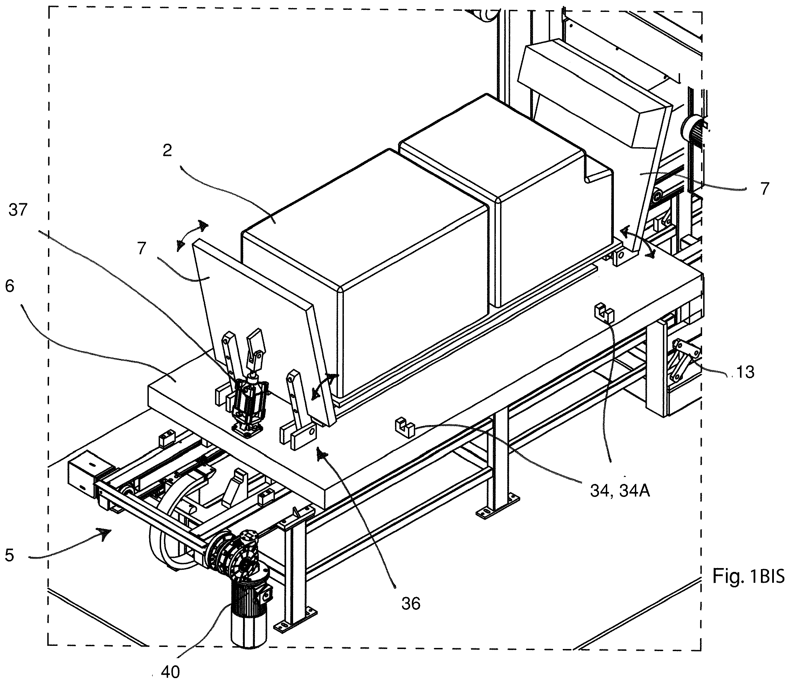

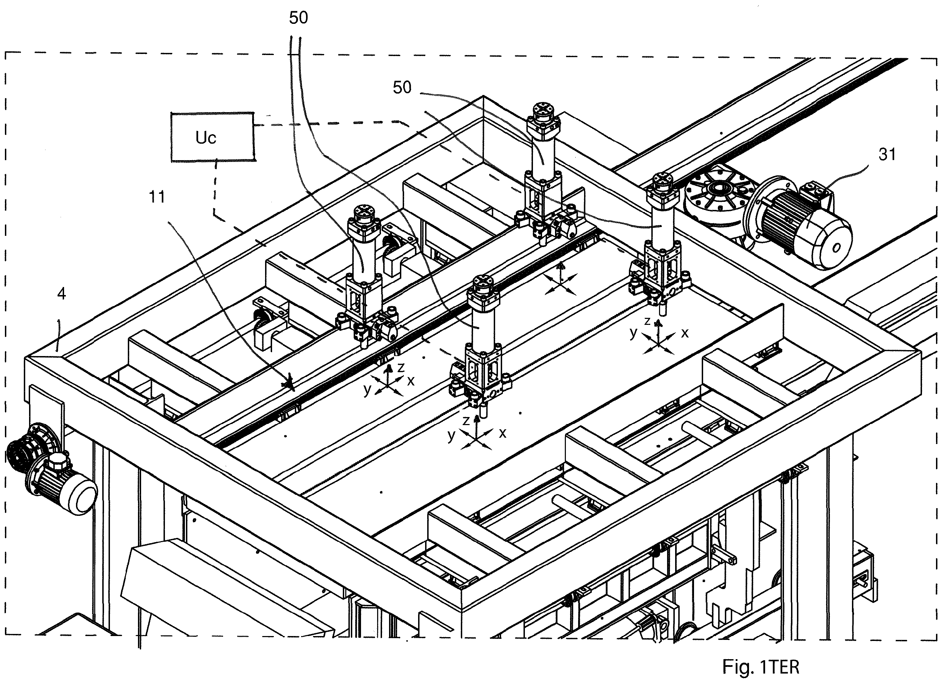

Fig. 1 is a perspective view of the foaming apparatus according to the invention, with a refrigerator cabinet placed on a support table outside the foaming station;
Fig. 1bis is an enlarged view of a portion of the apparatus in Fig. 1, in which the support table with the refrigerator cabinet is more visible;
Fig. Iter is an enlarged view of a portion in Fig. 1, in which mixing heads included in the apparatus are more visible;

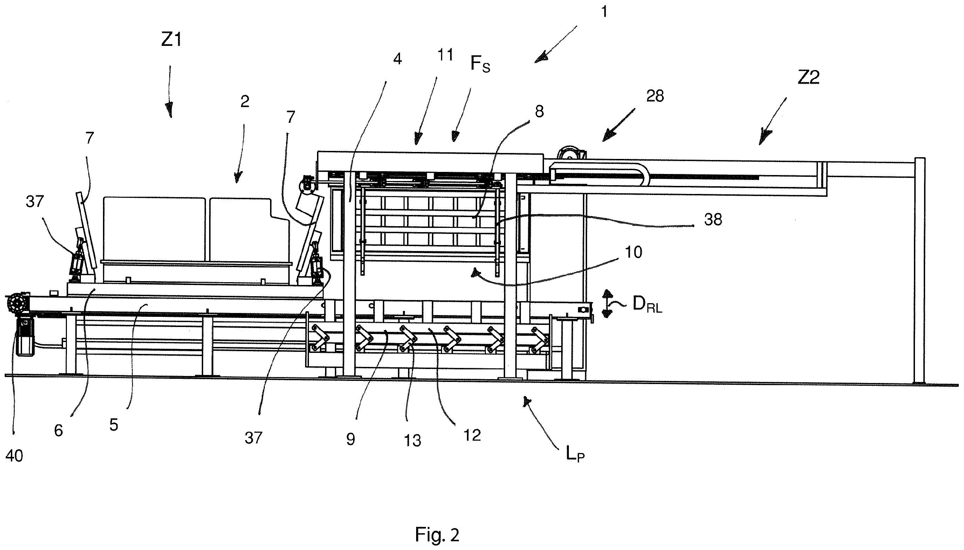

Fig. 2 is a side view of the foaming apparatus of Figure 1, in which two contrast walls are visible, mounted on the support table, in a position disengaged from the refrigerator cabinet;

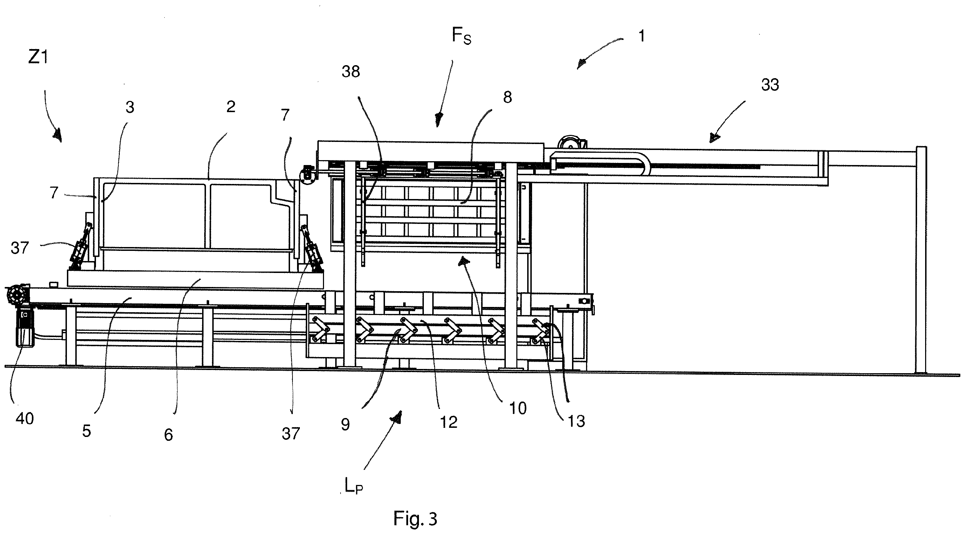

Fig. 3 is a side view of the foaming apparatus with the aforesaid two contrast walls coupled with the refrigerator cabinet;
Fig. 4 is a perspective view of the foaming apparatus with the refrigerator cabinet, supported by the support table, positioned in the foaming station, and with a contrast panel (backrest side) of the foaming jig separated and moved outside the foaming station;

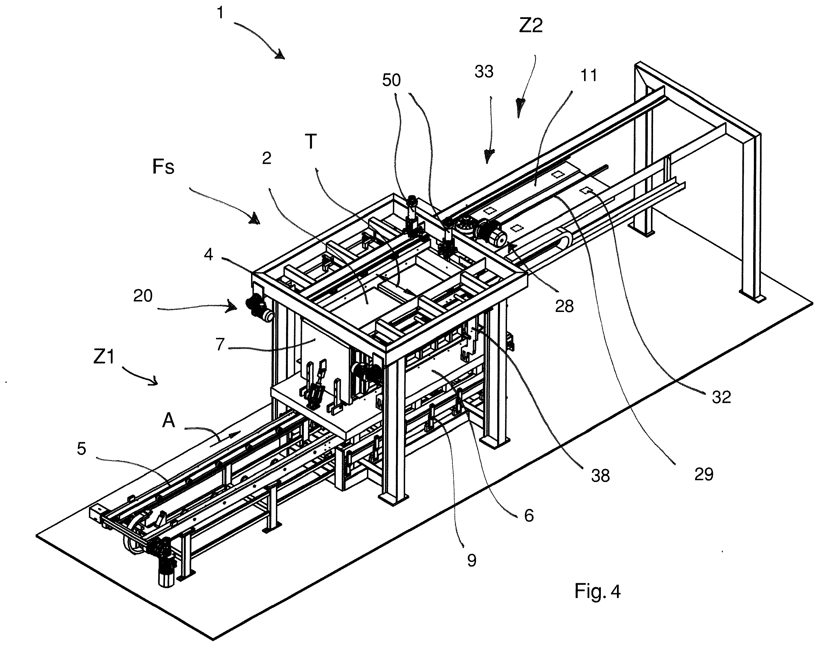

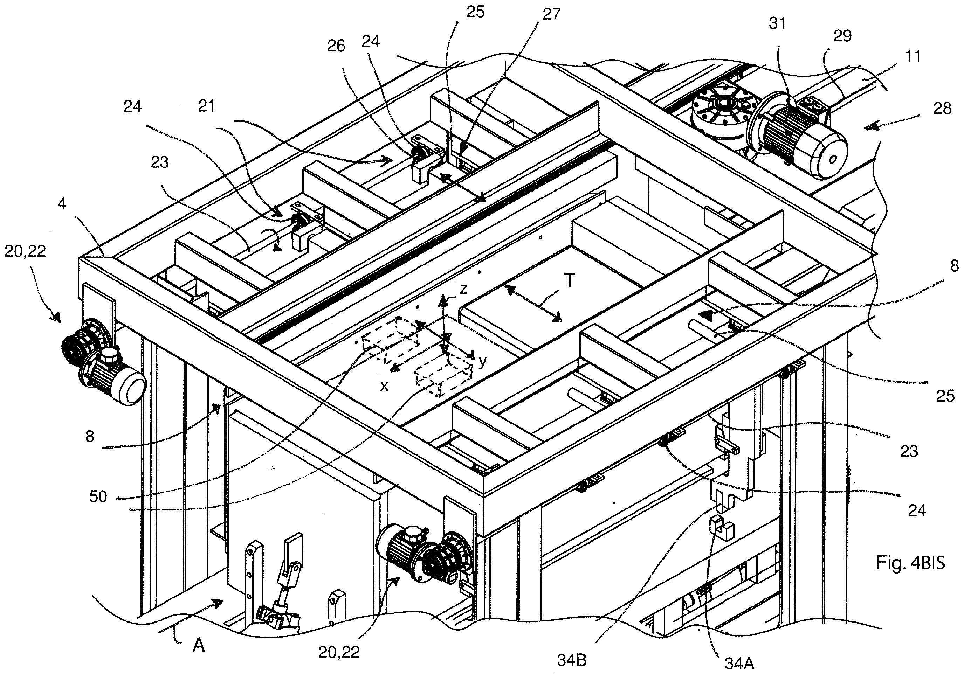

Fig. 4bis is an enlarged view of a portion of apparatus in Fig. 4 where the possible positions of the mixing heads are shown schematically by dashed parallelpipedons;

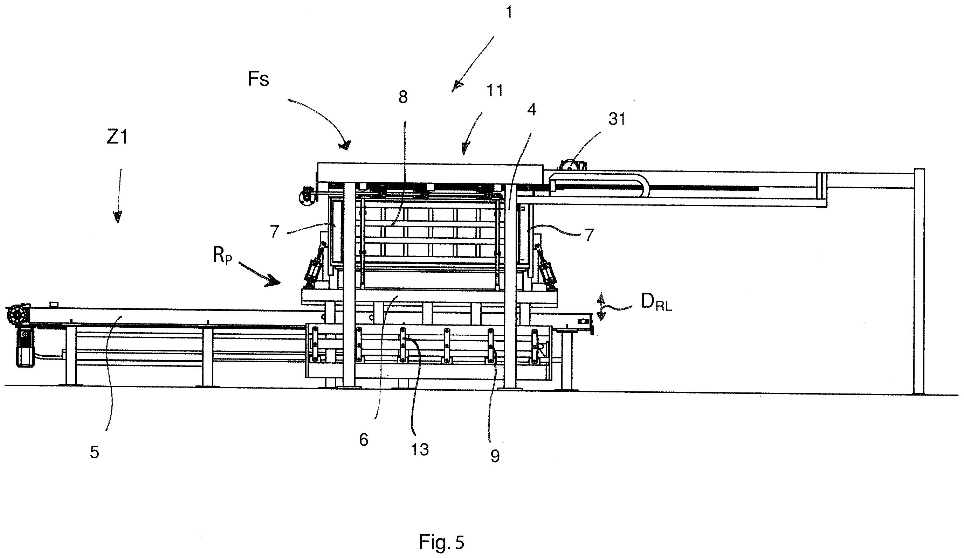

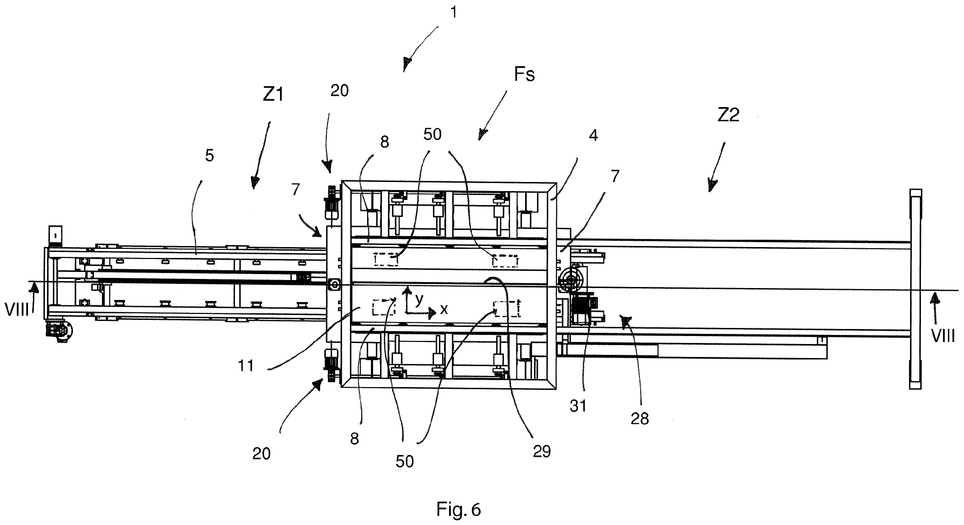

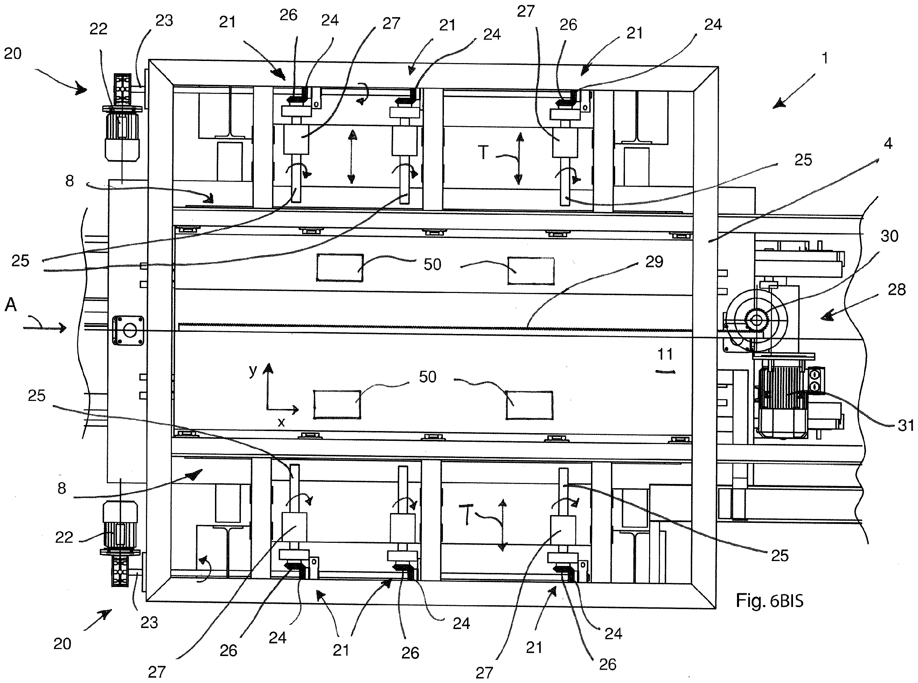

Figs 5 and 6 are respectively a side view and a top view of the foaming apparatus with the refrigerator cabinet enclosed in the foaming station;
Fig. 6bis is an enlarged view of a portion of apparatus in Fig. 6;

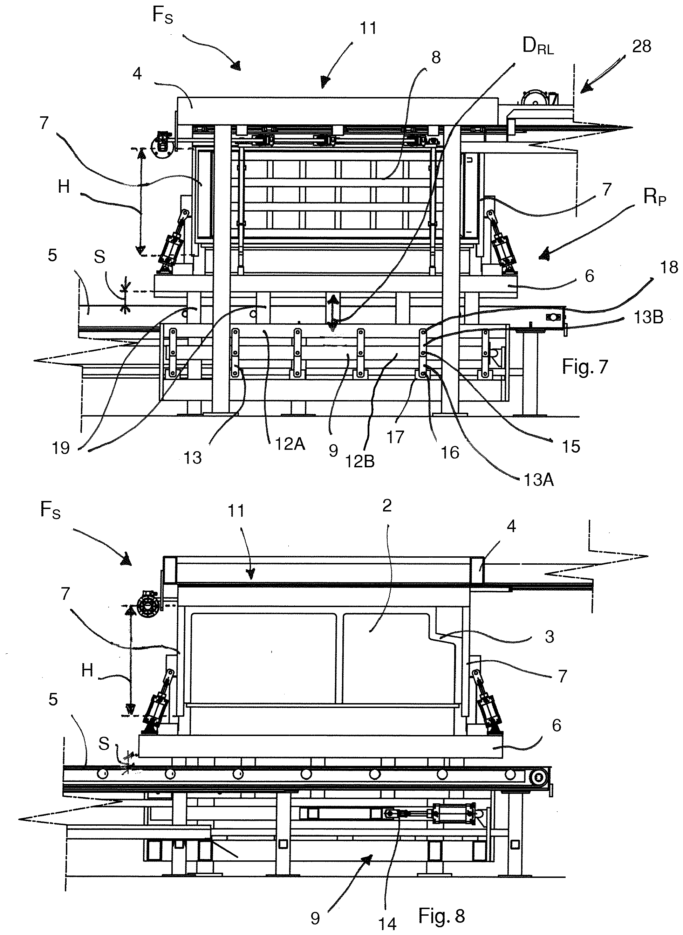

Fig. 7 is an enlarged view of a portion of apparatus in Fig. 5;
Fig. 8 is a fragmentary section view taken along the plane VIII-VIII in Fig. 6;

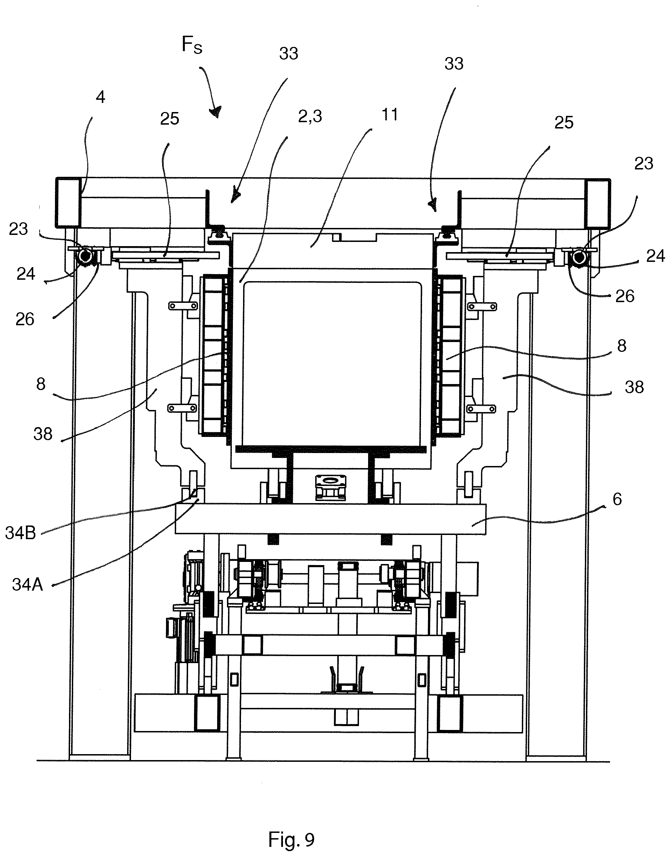

Fig. 9 is a cross section of the foaming apparatus;

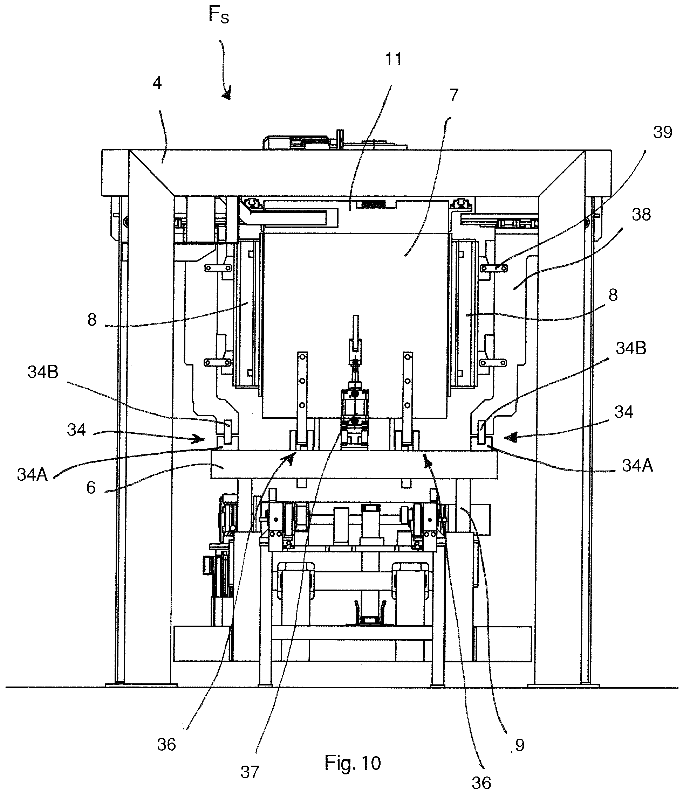

Fig. 10 is a frontal view of the foaming apparatus;

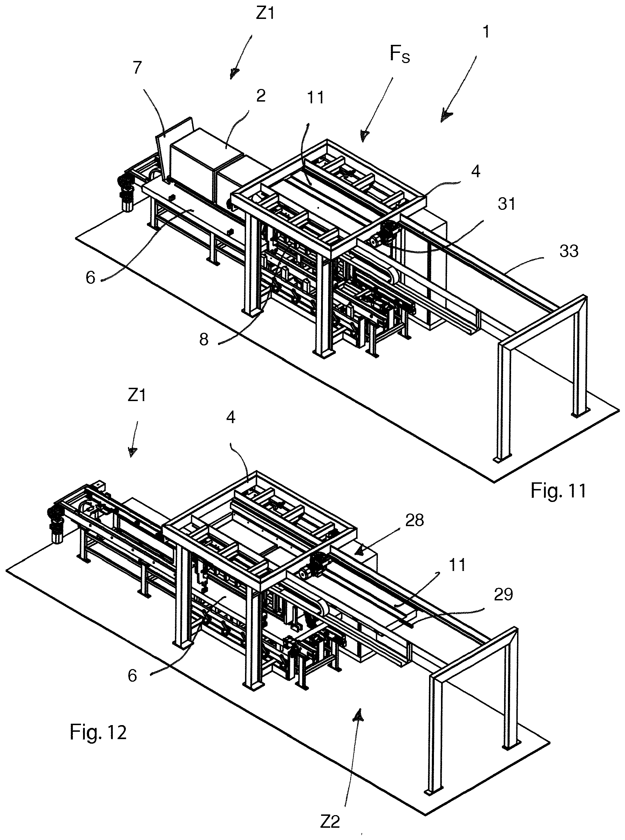

Fig. 11 is a different perspective view of the apparatus in the operating position shown in Fig.1, i.e. with the refrigerator cabinet placed on the support table outside the foaming station;
Fig. 12 shows, according to the perspective view of Fig. 11, the foaming apparatus with the refrigerator cabinet, supported by the support table, transferred to the foaming station, and with the contrast panel of the foaming jig transferred outside the foaming station;

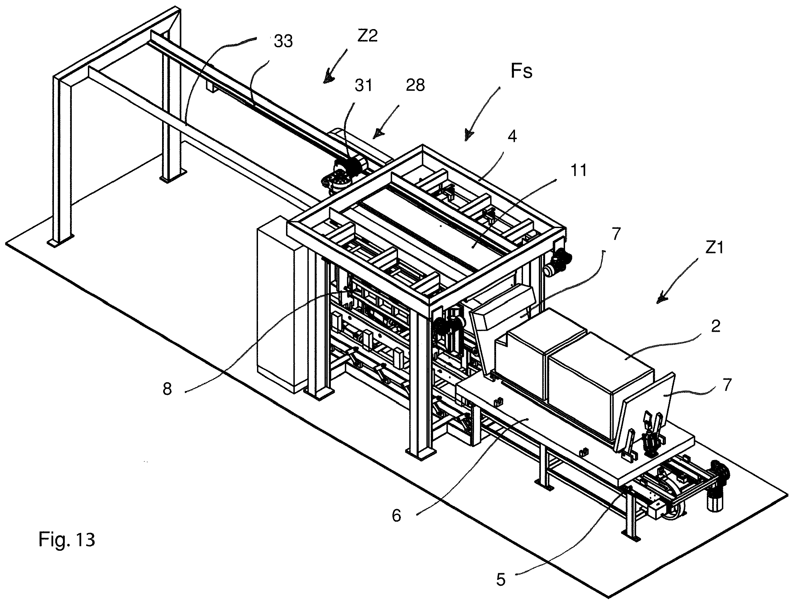

Fig. 13 shows, according to a further perspective view, the foaming apparatus with the refrigerator cabinet outside the foaming station;

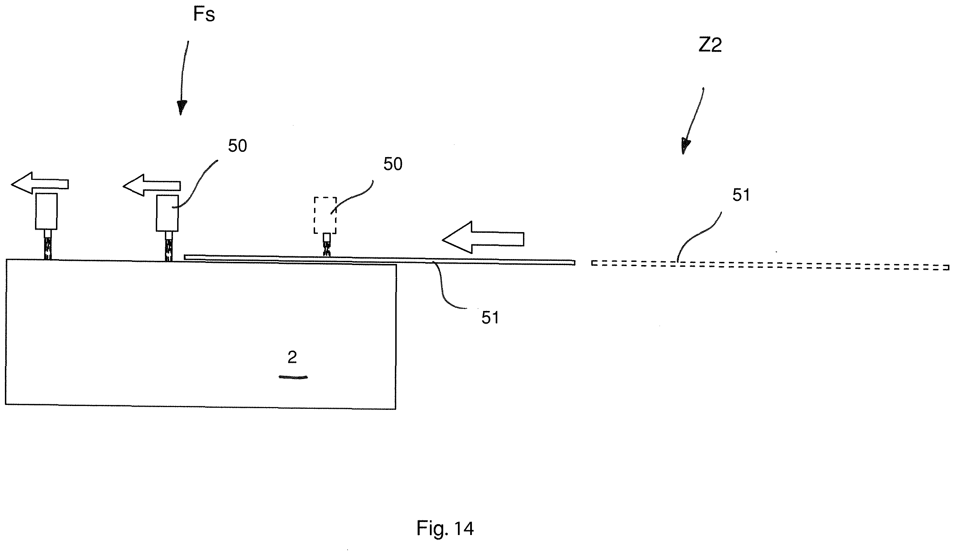

Fig. 14 is a diagram of a possible operation of the apparatus;

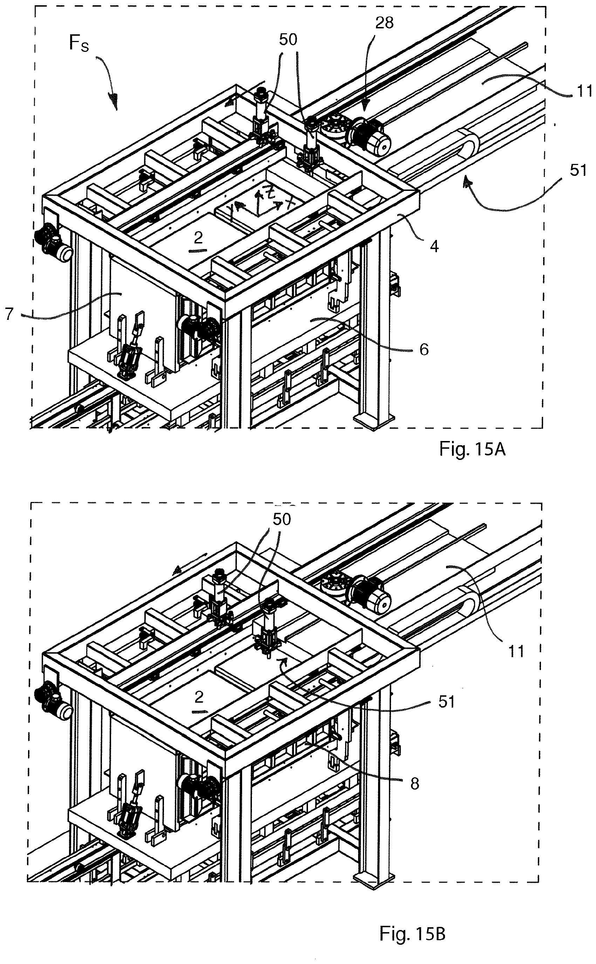

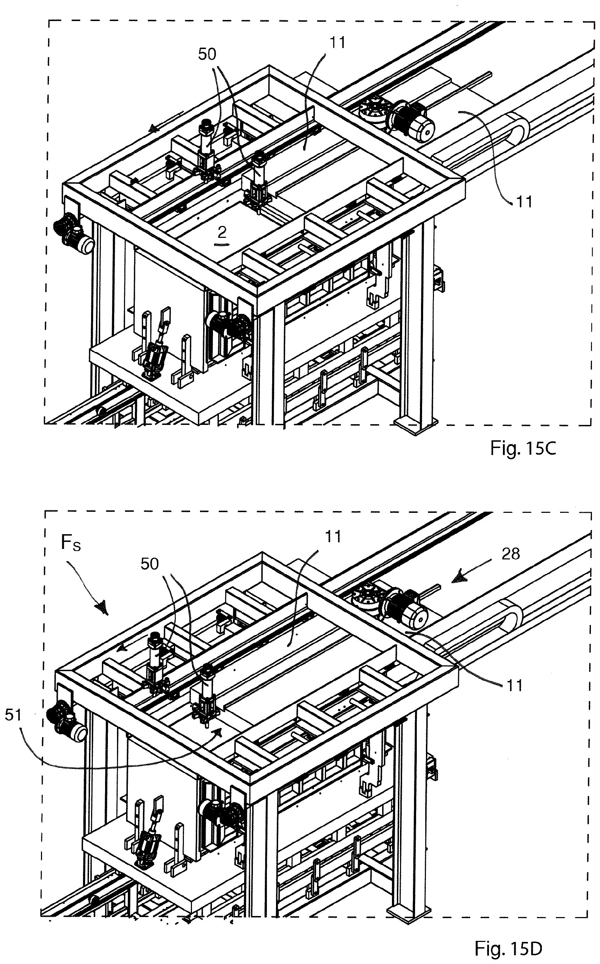

Figures 15A to 15D show various operating positions of the apparatus according to the operating mode schematized in Figure 14.

### DETAILED DESCRIPTIONS OF THE INVENTION

With reference to the attached figures, an apparatus 1 is disclosed for foaming a refrigerator cabinet 2 by using a polyurethane reactive mixture that is injected into the hollow walls 3 thereof.

The apparatus 1 comprises a structure 4 defining internally a foaming station F_{S}, and a conveyor unit 5, for example a conveyor plane 5 that extends from a loading/unloading zone Z1 for the refrigerator cabinets 2 up to the inside of the aforesaid structure 4.

The conveyor plane 5 is used to move, along an advancing direction A, the refrigerator cabinet 2 that has to be positioned in the foaming station F_{S}.

The apparatus 1 comprises a support table 6 that is movable by the conveyor plane 5, between the loading/unloading zone Z1 and the foaming station F_{S}.

The conveyor plane 5 is of the type comprising belt or chain means or equivalent means, drivable by a motor 40, in particular an electric motor, and engaging with the support table 6 to move the table 6 from the loading/unloading zone Z1 to the foaming station F_{S} and vice versa.

The support table 6 is shaped to support the refrigerator cabinet 2 with the inlet of the cavity facing downwards, i.e. in "face down" position.

One or more male elements are positionable on the support table 6 to counteract internally the thrust of the mixture that expands once it has been dispensed.

The refrigerator cabinet 2 is thus couplable with and uncouplable from, the male element when the support table 6 is in the loading/unloading zone Z1 outside the foaming station F_{S}.

A pair of opposite first contrast walls 7 is mounted on the support table 6 that are rotationally movable, shaped to exert from the outside on the refrigerator cabinet 2, from two opposite sides, a counteracting action against the expanding mixture.

As more visible in Fig. 1b, the first contrast walls 7 are rotatably connected to the support table 6 by hinge elements 36 the position of which on the support table 6 can be adjusted to adapt to the dimensions of the refrigerator cabinet 2.

On the support table 6, actuator means 37, for example of hydraulic, or pneumatic or equivalent type, are provided that is configured to rotate the first contrast walls 7 from a disengaged position to an engaged position with the refrigerator cabinet 2.

The apparatus 1 comprises a pair of opposite second contrast walls 8 that, unlike the first contrast walls 7, are mounted on the structure 4, i.e. in the foaming station F_{S}.

The second contrast walls 8, similarly to the first contrast walls 7, are shaped to exert from the outside on the refrigerator cabinet 2, from two further opposite sides, a respective counteracting action against the thrust of the expanding mixture.

The second contrast walls 8 are supported by vertical uprights 38 connected above to the structure 4 and projecting downwards. The second contrast walls 8 are connected to the aforesaid vertical uprights 38 by connecting rods 39 (fig. 10) that permit a small displacement in a horizontal and vertical direction of the second contrast walls 8. This configuration enables the second contrast walls 8, in the foaming jig opening step, to move by a small amount downwards through the effect of the weight thereof, and simultaneously, to move away (i.e. in a transverse direction) from the refrigerator cabinet 2, facilitating the disengagement thereof.

The apparatus 1 comprises, for at least one, precisely for both the second contrast walls 8, an adjustment device 20 configured to vary the reciprocal distance of the second contrast walls 8 to adapt to different widths L of the refrigerator cabinet 2.

The adjustment device 20 comprises a screw-nut transmission mechanism 21, which is drivable by an electric motor 22, to vary the position of a respective second contrast wall 8. As more visible in Fig. 4b, the adjustment device 20 comprises a drive shaft 23 drivable by the electric motor 22; the transmission mechanism 21 comprises screw means 25 connected to a respective contrast wall 8 and on the drive shaft 23 first conical toothed wheels 24 are keyed configured to mesh with, and rotate, second conical toothed wheels 26 keyed on the aforesaid screw means 25.

The screw means 25 engages with one or more stationary nut screw blocks 27, fixed to the structure 4.

The rotation of the screw means 25 - through the work of the drive shaft 23 - causes a displacement of the respective contrast wall 8 along a direction T that is transverse to an advancing direction A of said conveyor plane 5.

In this manner the adaptation of the contrast walls 8 to the width dimension of the refrigerator cabinet 2 is simple and immediate.

The apparatus 1 comprises a lifting device 9 configured to lift the support table 6, and thus the refrigerator cabinet 2 placed thereupon, from the conveyor plane 5, so as to abut reciprocally the support table 6 with lower surfaces 10 of the second contrast walls 8 and abut reciprocally the first contrast walls 7 with an upper contrast panel 11 that is mounted on the structure 4. In this manner, a foaming jig is defined inside which the refrigerator cabinet 2 to be foamed is enclosed.

The second contrast walls 8 and the top contrast panel 11 define together, in the foaming station F_{S}, a tunnel chamber inside which the refrigerator cabinet 2 is introducible by advancing of the support table 6.

The lifting device 9, more precisely, is configured to translate the support table 6 along a very limited lifting/lowering stroke S, and that is considerably reduced compared to the height H of the first contrast walls 7 and of the second contrast walls 8. As a result, the translation time is very reduced for taking the support table 6 (and thus the refrigerator cabinet 2) from a raised position R_{P} to a lowered position L_{P} and vice versa.

The lifting/lowering stroke S has a much reduced length but is sufficient to enable the support table 6 and the second contrast walls 8 to be coupled/uncoupled reciprocally by suitable abutting and holding means 34.

For example, to give an example of how limited the stroke S is compared with known systems, if the height H of the contrast walls 7 and 8 varies between 60 cm and 100 cm, the stroke S can vary from about 5 cm to about 15 cm.

The lifting device 9 comprises bar means 12A, 12B or horizontal beam means, which are vertically movable, remaining parallel to themselves and mutually connected by a connecting-rods-articulated mechanism 13 drivable by actuator means 14.

The connecting-rods-articulated mechanism comprises pairs of distributed connecting rods 13 and each pair of connecting rods comprises a first connecting rod 13A and a second connecting rod 13B mutually hinged on one articulated connection end 15.

The lower end 16 of each first connecting rod 13A is hinged on a fixed part 17 of the structure 4, whereas an upper end 18 of each second connecting rod 13B is hinged on upper bars 12A included in the lifting device 9.

The lifting device 9 comprises movement transfer bars 12B to which the articulated connection ends 15 of the pairs of connecting rods 13 are rotatably connected; the aforesaid movement transfer bars 12B are movable horizontally and vertically under the action of the actuator means 14 to vary the tilt of the connecting rods 13 and cause lifting/lowering of said upper bars 12A.

To the upper bars 12A, tip elements 19, projecting upwards, are fixed that are formed to emerge above the surface of the conveyor plane 5 to come into contact with and lift, along the aforesaid stroke S, the support table 6.

The connecting rod articulated mechanism is so configured that the connecting rods 13 of each pair are movable from a first oriented position, corresponding to the lowered position Lp of the support table 6, in which the connecting rods 13 are mutually tilted, to a second oriented position, corresponding to the raised position R_{P} of the support table 6, in which the connecting rods 13 of each pair are mutually axially aligned and arranged parallel to the lifting/lowering direction D_{RL}, i.e. orthogonally with respect to the plane along which said support table 6 extends. From the kinematic point of view, the connecting rods 13 are so arranged as to slow down the upward movement of the support table 6 before the final closing contact of the foaming jig; owing to the thus configured lever mechanism, slowing down of the movement in the final instants of lifting is obtained, preventing in this manner undesired shocks between the parts that come into reciprocal contact.

In the raised position R_{P}, the connecting rods 13 of each pair are arranged with the axes thereof substantially aligned or parallel, extending in a vertical direction. In this configuration, the connecting rods 13 thus behave as struts, acting in fact as a security block. In other words, the connecting rods 13, acting as struts, perform an arrest or security block function, to secure the support table 6 in this raised position R_{P}; in this manner, the locking function being determined intrinsically by the specific configuration and orientation of the connecting rods 13, it is not necessary to keep the actuator means 14 supplied for all the time in which the foaming jig should remain closed.

The apparatus 1 further comprises abutting and holding means 34 for reciprocal coupling of the support table 6 with the second contrast walls 8.

Precisely, the abutting and holding means comprises seat elements 34A, mounted on the support table 6, and insertion portions 34B provided on the vertical uprights 38 and shaped for being received in and engaged with the seat elements 34A.

The position of the seat elements 34A is adjustable to adapt to the position of the second contrast walls 8 according to the width of the refrigerator cabinet 2.

Along the perimeter edges of the first 7 and second 8 contrast walls, seals are applied shaped to enable, in the closed condition of the foaming jig, the generation, by suitable pump vacuum means, of a certain vacuum degree inside the foaming jig, to make possible a vacuum-foaming operation of the refrigerator cabinet 2.

The apparatus 1 comprises a removal device 28 configured to remove and transfer the top contrast panel 11 from the foaming station F_{S} to an outer zone Z2 to facilitate access to, and allow possible adjustments/replacements on the top contrast panel 11.

In particular, the outer zone Z2 is located on the opposite side to the loading/unloading zone Z1 with respect to the foaming station F_{S}.

As shown better in figures 4bis, 6 and 6 bis, the removal device 28 comprises rack means 29 coupled with the top contrast panel 11 and meshing with toothed wheel means 30 that is drivable by an electric motor 31.

From the structure 4, guide rail means 33 projects horizontally shaped to guide the top contrast panel 11 in the movement thereof from the foaming station F_{S} to the aforesaid outer zone Z2.

The apparatus 1 is provided with gripping means 32 configured to grasp and separate a part that makes up the refrigerator cabinet 2, in particular the outer shell portion intended to act as a rear backrest for the refrigerator in its normal use. The gripping means 32 can be provided on the top contrast panel 11, and is then movable, by the aforesaid removal device 28, to transfer the aforesaid (rear) portion of outer shell to the outer zone Z2, leaving the remaining part of refrigerator cabinet 2 in the foaming station F_{S}.

The gripping means 32 can be magnet means and/or suction cup means and/or grasping means through air sucking and/or equivalent means.

Owing to the removal device 28 and to the gripping means 32, in addition to making interventions on the top contrast panel 11 easier, it is also possible to perform interventions on the aforesaid (rear) portion of the refrigerator cabinet, or facilitate the access - by possible processing equipment or devices - to the refrigerator cabinet 2 that remains open behind (above).

The apparatus 1 comprises one or more mixing heads 50, positioned and movable in a synchronized and programmable manner in an upper region of the foaming station F_{S} and configured for face-down foaming of the refrigerator cabinet 2.

The position and the movement of the mixing heads 50 are suitably programmed, synchronized and distributed so as to minimize the distances that the various injection flows have to cover.

The apparatus 1 enables face-down foaming to be performed by the aforesaid mixing heads 50, both in the closed mould configuration, i.e. if the refrigerator cabinet 2 is provided with the outer shell portion that acts as a rear backrest 51, and in the open mould mode, i.e. if the aforesaid rear backrest 51 has been previously removed from the refrigerator cabinet 2 by the gripping means 32 and the removal device 28 disclosed above.

In order to perform closed mould face-down foaming, the top contrast panel 11 is provided with through injection openings through which the dispensing ducts of the mixing heads can intercept and be inserted into corresponding injection holes made in the rear backrest 51 of the refrigerator cabinet 2, so as to permit the reactive mixture to be injected inside the latter. The mixing head/s 50 are pre-positioned along directions X, Y and also moved vertically (direction Z) so as to reach the aforesaid openings and holes and thus start injecting of the reactive mixture.

The mixing head/s 50 are supported by movement devices that can be of the carriage type that is movable along horizontal and vertical X-Y axes or directions (Z axis or direction) or of the anthropomorphic robot type that is movable in space or other equivalent movement means.

For the purposes of the foaming process in open mould mode, the apparatus 1 is further provided with a control unit U_{C} to program, control and move, by the aforesaid carriage-moving devices or anthropomorphic robot, the mixing head/s 50 in a programmed manner by interpolation at least according to two horizontal directions or axes (X) and (Y).

By the control unit U_{C}, it is possible to program, for each mixing head 50, the corresponding positions and interpolated speeds that the control unit Uc has to reach in the course of the foaming cycle so as to cover the entire upper surface of the refrigerator cabinet 2.

The control unit U_{C} thus intervenes to control and synchronize the start and stop dispensing steps and the dispensing flow rates of the reactive mixture for each mixing head 50, in function of the specific positions progressively reached by the latter. Further, with reference to Figures 14 to 15D, the control unit U_{C}, which is operationally connected also to the removal device 28, in the open mould foaming configuration, is also able to control the advance of the mixing head/s 50, during dispensing, to the inlet section of the foaming station Fs, while, simultaneously, it controls the removal device 28 so that the refrigerator cabinet 2 is progressively reclosed by the backrest 51 supported by the upper contrast panel 11; by so doing, the backrest 51 (in this case devoid of injection holes), in a synchronized manner, performs a movement that is synchronized with that of the mixing head/s 50, following the latter and progressively covering the zones that have been gradually reached by the dispensing reactive mixture. In this manner, the risk of leaks of progressively and rapidly reactive mixture outside the refrigerator cabinet 2 and foaming cycle time are also reduced.

The operation of the apparatus 1, thus the corresponding foaming method is disclosed briefly below.

Initially, the refrigerator cabinet 2 is positioned, in the loading/unloading zone Z1, on a support table 6 with the inlet of the cavity facing downwards.

The actuator means 37 is driven to rotate the first contrast walls 7 to abut against the refrigerator cabinet 2. The second contrast walls 8, which are placed in the foaming station F_{S}, are adjusted in position according to the width of the refrigerator cabinet 2.

The conveyor plane 5 is driven on which the support table 6 bearing the refrigerator cabinet 2 rests so as to transfer the latter from the loading/unloading zone Z1 to the inside of the foaming station F_{S}.

The lifting device 9 is driven that lifts, by the tip elements 19, the support table 6 along the stroke S. At this point, the second contrast walls 8 are abutted on the sides of the refrigerator cabinet 2.

The refrigerator cabinet 2 is closed laterally by the contrast wall 7, 8, below by the support table 6, and above by the top contrast panel 11.

Once the refrigerator cabinet 2 has been closed inside the foaming jig, it is possible to start dispensing and injecting of the reactive mixture to perform closed mould face-down foaming.

It is possible to generate in the foaming jig, in the closed condition, a certain vacuum degree generated by air suction to perform vacuum-foaming of the refrigerator cabinet 2.

If, before starting the foaming operation, it is necessary to perform interventions on the top contrast panel 11 (or also simply to perform a cleaning operation thereupon), it is possible to drive the removal device 28 that transfers the top contrast panel 11 from the foaming station F_{S} to the outer zone Z2, making the operations easier for an operator.

Once the refrigerator cabinet 2 is enclosed in the foaming jig, the one or more mixing heads 50 are so moved vertically as to insert the dispensing ducts into the through openings of the upper contrast panel 11 and corresponding injection holes made in the backrest 51 of the refrigerator cabinet 2. At this point, dispensing of the reactive mixture can occur.

If it is desired to proceed with open mould face-down foaming, it will be sufficient, before moulding, to drive the removal device 28 and the gripping means 32 to grasp the rear backrest 51 of the refrigerator cabinet and transfer the rear backrest 51 to the outer zone Z2, leaving the refrigerator cabinet 2 open above that in this manner is freely accessible to the mixing head/s 50.

The mixing heads 50 can be moved in a programmed manner (owing to the control unit U_{C}) by interpolation according to two horizontal directions (X) and (Y).

More precisely, for each head 50, the positions and interpolated speeds are programmed to cover with foam (reactive mixture) the entire upper surface of the refrigerator cabinet 2. The positions and speeds that each mixing head 50 has to reach, and the corresponding flow rate values, are arranged so as to take account of the local geometry of the refrigerator cabinet 2 (obstacles, greater or lesser local thickness of the gap, etc.). The start and end of dispensing are synchronized with the kinematic values (position and speed) that have been programmed in the control unit Uc for each mixing head 50. Once dispensing has finished and the mixing heads 50 are removed, the removal device 28 returns the backrest 51 to the position coupled with the refrigerator cabinet 2.

According to another possible open mould operating mode, schematized conceptually in Figure 14 and with reference to Figures 15A to 15D, the foaming cycle is programmed, in the control unit U_{C}, so as to position and move the mixing head/s 50, during the first step of dispensing, to the inlet section in the foaming station F_{S} (i.e. the end of the foaming station F_{S} through which the refrigerator cabinet 2 is introduced/extracted that is near the loading/unloading zone Z1 and opposite the outer zone Z2); subsequently, the mixing head/s 50 are moved and positioned during programmed dispensing to the inlet section near the zone Z1 while, simultaneously, the removal device 28 is programmed to reclose progressively the refrigerator cabinet 2 with the backrest 51, in a synchronized manner, following the movement of said one or more mixing heads 50; the backrest 51 is then translated progressively so as to cover the zones that have been progressively reached by the dispensing of reactive mixture. In this manner, an undesired possible overflow of reactive mixture in progressive and rapid expansion is prevented and at the same time still greater optimation of production time is achieved.

From what has been disclosed with the help of the attached drawings, it is clear that all the above stated objects have been achieved. In particular, a new and different solution has been provided that enables foaming of refrigerator cabinets and the like to be facilitated and speeded up, significantly reducing cycle times, thus achieving a general improvement of productivity. The apparatus 1 according to the invention makes adjustment of the foaming jig easier to adapt to refrigerator cabinet sizes and geometries that are different each time.

The apparatus 1 further enables the various parts of the foaming jig to be accessed and reached more easily, in particular the top contrast panel 11, to permit various operations of maintenance, adjustment, model changing, cleaning, etc.

It is possible to configure and size the apparatus 1 and adopt materials for making the parts that make up the apparatus 1, according to specific needs.

It is understood that what has been said and shown in the attached drawings has been provided merely by way of illustration of the apparatus 1 and of the general features and of a preferential embodiment thereof according to the present invention. Other modifications can accordingly be made to the entire foaming apparatus 1 or to single parts thereof without thereby falling outside the scope of the claims.

## Claims

1. Apparatus for foaming a refrigerator cabinet (2) by means of a polyurethane reactive mixture which is injected into hollow walls (3) of said refrigerator cabinet (2), said apparatus (1) comprising:
- a structure (4) defining a foaming station (F_{S}) and provided with a top contrast panel (11) for counteracting the thrust of the expanding mixture for said refrigerator cabinet (2),
- one or more mixing heads (50) configured to dispense the polyurethane reactive mixture into said refrigerator cabinet (2), said one or more mixing heads (50) being distributed, positionable and movable in a programmed manner in an upper region of said foaming station (F_{S}),
- a conveyor unit (5) that extends from a loading/unloading zone (Z1) for the refrigerator cabinets (2), to as far as inside said structure (4) for positioning the refrigerator cabinet (2) in said foaming station (F_{S}).
- a support table (6), that is movable by said conveyor unit (5) between said loading/unloading zone (Z1) and said foaming station (F_{S}) and shaped to support said refrigerator cabinet (2) with the cavity facing downwards, on said support table (6) at least one male element being positionable for counteracting from the inside the thrust of said expanding mixture, said male element being movable together with said support table (6) and being engageable with and disengageable from, said refrigerator cabinet (2) in said loading/unloading zone (Z1) outside said foaming station (F_{S}),
- on said support table (6) a pair of opposite first contrast walls (7) being mounted to counteract the thrust of the expanding mixture, rotatably movable by hinge elements (36), and shaped to exert from the outside on said refrigerator cabinet (2) from two opposite sides a counteracting action on the expanding mixture;
- a pair of opposite second contrast walls (8) being mounted on said structure (4) and shaped to exert from the outside on said refrigerator cabinet (2), from two further opposite sides, a respective counteracting action for counteracting the thrust of said expanding mixture, wherein said opposite second contrast walls (8) define, in said foaming station (F_{S}), together with said top contrast panel (11), a tunnel chamber into which said refrigerator cabinet (2) is introducible by advancing said support table (6),
- abutting and holding means (34) for mutual coupling of said support table (6) with said second contrast walls (8) and
- a lifting device (9) configured to lift said support table (6) with said refrigerator cabinet (2) from said conveyor unit (5) to bring said support table (6) to abut reciprocally on lower surfaces (10) of said second contrast walls (8) and to bring said first contrast walls (7) to abut reciprocally with said top contrast panel (11), so as to define a foaming jig inside which said refrigerator cabinet (2) is enclosed, wherein
- said lifting device (9) is configured to translate said support table (6) along a lifting/lowering stroke (S) that is considerably reduced compared to the height (H) of said first contrast walls (7) and said second contrast walls (8), with a consequent very limited translation time,
- said lifting/lowering stroke (S) being of reduced length but sufficient to enable said support table (6) and said second contrast walls (8) to reciprocally couple/uncouple by said abutting and holding means (34).

2. Apparatus according to claim 1, wherein said lifting device (9) comprises bar means (12A, 12B) or horizontal beam means, vertically movable, remaining parallel to themselves and mutually connected by an articulated connecting rod mechanism (13) drivable by actuator means (14).

3. Apparatus according to claim 2, wherein said articulated connecting rod mechanism comprises pairs of distributed connecting rods (13), each pair of connecting rods comprising a first connecting rod (13A) and a second connecting rod (13B) mutually hinged at an articulated connection end (15), so as to be connected together in a connecting joint by pins to a central bar (12B) for synchronization thereof, wherein one lower end (16) of said first connecting rod (13A) is hinged on a fixed part (17) of said structure (4), and wherein an upper end (18) of said second connecting rod (13B) is hinged on upper bars (12A) that are movable vertically and included in said lifting device (9).

4. Apparatus according to claim 3, wherein said articulated connecting rod mechanism is so configured that the connecting rods (13) of each pair are movable from a first oriented position, corresponding to a lowered position (Lp) of said support table (6), in which these connecting rods (13) are mutually tilted, to a second oriented position, corresponding to a raised position (R_{P}) of said support table (6), in which the connecting rods (13) of each pair are mutually axially aligned and arranged parallel to the lifting/lowering direction (D_{RL}), i.e. orthogonally with respect to the plane along which said support table (6) extends, the connecting rods (13) being kinematically arranged to slow down the upward movement of said support table (6) before the final closing contact of the foaming jig, these connecting rods (13) being such as to act as a strut and perform a stop function to secure said support table (6) in said raised position (Rp).

5. Apparatus according to claim 3 or 4, wherein said bar means comprises movement transfer bars (12B) to which the articulated connection ends (15) of said pairs of connecting rods (13) are pivotally connected, said movement transfer bars (12B) being horizontally and vertically movable under the action of said actuator means (14) to vary the tilt of said connecting rods (13) and cause a lifting/lowering of said upper bars (12A), wherein tip elements (19), projecting upwards, are fixed to said upper bars (12A), shaped so as to emerge above said conveyor unit (5) to come into contact and lift said support table (6) along said stroke (S), and wherein an adjustment device (20) is provided that is configured to vary the reciprocal distance of said second contrast walls (8) to adapt to different widths (L) of a refrigerator cabinet (2), said adjustment device (20) being provided with a screw-nut transmission mechanism (21) that is drivable by an electric motor (22), to vary the position of a respective second contrast wall (8), and wherein said adjustment device (20) comprises a drive shaft (23) that is drivable by said electric motor (22), and wherein said transmission mechanism (21) comprises screw means (25) connected to a respective contrast wall (8), on said drive shaft (23) first conical toothed wheels (24) being keyed that are configured to mesh with, and rotate, second conical toothed wheels (26) keyed onto said screw means (25), said screw means (25) engaging with one or more stationary nut screw blocks (27), fixed to said structure (4), the rotation of said screw means (25) operated by said drive shaft (23) determining a displacement of the contrast wall (8) along a direction (T) that is transverse to an advancing direction (A) of said conveyor unit (5).

6. Apparatus according to any one of the preceding claims, comprising a removal device (28) configured to remove and transfer said top contrast panel (11) from said foaming station (F_{S}) to an outer zone (Z2) to facilitate access to, and allow possible adjustments/replacements on said top contrast panel (11).

7. Apparatus according to any preceding claim, further comprising gripping means (32) configured to separate from said refrigerator cabinet (2) an outer shell portion intended to act as a rear backrest (51) for the refrigerator in normal use thereof, wherein said gripping means (32) is movable, by said removal device (28), from said foaming station (F_{S}) to said outer zone (Z2).

8. Apparatus according to the preceding claim, wherein said gripping means (32) is mounted on said top contrast panel (11) and is of the type comprising magnet means and/or suction cup means and/or grasping means through air sucking and/or equivalent means.

9. Apparatus according to one or more of the preceding claims, wherein said outer zone (Z2) is located on the opposite side to said loading/unloading zone (Z1) with respect to said foaming station (F_{S}).

10. Apparatus according to any one of the preceding claims, wherein said second contrast walls (8) are supported by vertical uprights (38) connected above to said structure (4) and projecting downwards, said second contrast walls (8) being connected to said vertical uprights (38) by tiny connecting rods (39) which allow a small displacement in the horizontal and vertical direction of said second contrast walls (8), and wherein said abutting and holding means comprises seat elements 34A, mounted on said support table 6, and insertion portions 34B provided on the vertical uprights 38 and shaped to be received in and engage with, said seat elements (34A), the position of said seat elements (34A) being adjustable to adapt to the position of said second contrast walls (8) according to the width of the refrigerator cabinet (2).

11. Apparatus according to any one of the preceding claims, wherein said first contrast walls (7) are connected to said support table (6) by a connection that permits a position adjustment to adapt to different dimensions of the refrigerator cabinet (2), hydraulic or pneumatic actuator means (37) being provided that are configured to rotate said first contrast walls (7) from a disengaged position to an engaged position with the refrigerator cabinet (2).

12. Apparatus according to any one of the preceding claims, comprising seal means arranged along the peripheral edges of said first (7) and second contrast walls (8), configured to allow, in the closed condition of said foaming jig, the generation of a certain vacuum degree therein, to perform vacuum-foaming of said refrigerator cabinet (2).

13. Apparatus according to any one of the preceding claims, wherein said one or more mixing heads (50) are installed on supports that are movable and positionable in a programmed manner for face-down foaming of the refrigerator cabinet (2) both in the closed mould configuration in which said refrigerator cabinet (2) is provided with the outer shell portion that acts as a rear backrest (51) for the refrigerator, and in the open mould configuration in which said outer shell portion that acts as a rear backrest (51) has been previously removed from said refrigerator cabinet (2).

14. Apparatus according to claim 13, wherein in said top contrast panel (11) through injection openings are obtained through which the dispensing duct/s of said one or more mixing heads (50) can intercept and insert into corresponding injection holes made on the outer shell portion that acts as the rear backrest (51) for the refrigerator, so as to allow the dispensing and/or injection of the reactive mixture inside the refrigerator cabinet (2).

15. Apparatus according to any one of the preceding claims, further comprising a control unit (U_{C}) for controlling and moving, by means of carriage-moving devices according to two horizontal axes (X) and (Y) by interpolation and a vertical axis (Z) or by anthropomorphic robot, said one or more mixing heads (50) in a manner programmed by interpolation in space, wherein said control unit (Uc) is configured to program, control and synchronize the start and stop dispensing steps and the dispensing rates of the reactive mixture according to the specific positions reached by said one or more mixing heads (50) the interpolated positions and speeds of which are programmable by said control unit (U_{C}) and are such as to cover, with the movement of the heads (50), the entire upper surface or the rear side of the section of said refrigerator cabinet (2).

16. Apparatus according to the preceding claim, wherein said control unit (U_{C}), in the open mould foaming mode, is configured to program positioning and moving said one or more mixing heads (50), during dispensing, to start a first dispensing step nearer the outer section (Z2) (opposite the inlet section Z1) and to continue and complete the dispensing by moving said head (s) towards the inlet section in said foaming station (F_{S}) for said refrigerator cabinet (2) while, simultaneously, said removal device (28) is programmed, controlled and operated by said control unit (U_{C}) so as to progressively reclose said refrigerator cabinet (2) with the backrest (51) supported by said upper contrast panel (11) in a synchronized manner, following the movement of said one or more mixing heads (50), said backrest (51) being moved to cover the zones as the zones have been reached by the dispensing of a progressively expanding reactive mixture.

17. Method for foaming a refrigerator cabinet (2) by means of a polyurethane reactive mixture which is injected into hollow walls (3) of said refrigerator cabinet, comprising the steps of:
- positioning, in a loading/unloading zone (Z1), said refrigerator cabinet (2) with the inlet of the cavity facing downwards, on a support table (6) bearing at least one male element that is suitable for counteracting internally the thrust of the expanding mixture,
- rotating a pair of first contrast walls (7) against said refrigerator cabinet (2) to exert from the outside on said refrigerator cabinet (2) from two opposite sides a counteracting action against the thrust of the expanding mixture;
- arranging, inside a foaming station (F_{S}), a pair of second contrast walls (8) supported above by a structure (4), said second contrast walls (8) being shaped to exert from the outside on said refrigerator cabinet (2), from two further opposite sides, a respective counteracting action against the thrust of the expanding mixture;
- transferring, by a conveyor unit (5), said support table (6) bearing said refrigerator cabinet (2) from said loading/unloading zone (Z1) to said foaming station (Fs),
- translating upwards, by a lifting device (9), said support table (6) bearing said refrigerator cabinet (2) by a stroke (S) that is considerably reduced compared to the height (H) of said first contrast walls (7) and of said second contrast walls (8), so as to
- reciprocally abut said support table (6) with lower surfaces (10) of said second contrast walls (8) and to reciprocally abut said first contrast walls (7) with a top contrast panel (11), so as to define a foaming jig inside which said refrigerator cabinet (2) to be foamed is enclosed.
- dispensing the reactive mixture inside the hollow walls (3) of said refrigerator cabinet (2) by one or more mixing heads (50) that are positionable and movable in a programmed manner.

18. Method according to the preceding claim, wherein, before dispensing of the reactive mixture, the position of said first (7) contrast walls on said support table (6) is adjusted, and the reciprocal distance of said second contrast walls (8) is adjusted, to adapt to the dimensions of said refrigerator cabinet (2), and wherein, by a removal device (28), said top contrast panel (11) is removed and transferred from said foaming station (F_{S}) to an outer zone (Z2) to facilitate access to, and allow possible adjustments/replacements on said top contrast panel (11).

19. Method according to the preceding claim, wherein by gripping means (32) provided on said top contrast panel (11) and by said removal device (28), an outer shell portion of said refrigerator cabinet (2) is grasped that acts as the rear backrest (51) for the refrigerator and is separated from said refrigerator cabinet (2) to be taken to said outer zone (Z2), so as to leave said refrigerator cabinet (2) open at the top.

20. Method according to the preceding claim, wherein after removal of said rear backrest (51) from said refrigerator cabinet (2), there is provided - by said one or more mixing heads (50) positioned and moved in a programmed manner in an upper region of said foaming station (F_{S}) - dispensing above in a synchronized manner one or more flows of reactive mixture inside the refrigerator cabinet (2) arranged in the face-down position so as to perform open mould foaming in the face-down configuration, and wherein, by a control unit (U_{C}), said one or more mixing heads (50) are moved, supported by carriage-moving devices according to two horizontal axes (X) and (Y) by interpolation and a vertical axis (Z) or by anthropomorphic robot, in a programmed manner by interpolation in space.

21. Method according to claim 20, wherein, for said one or more mixing heads (50) the relative positions and interpolated speeds are programmed by said control unit (Uc) so as to cover with the movement of said heads (50) the entire upper surface or the rear side of said refrigerator cabinet (2) and control and synchronize the start and stop dispensing steps and the dispensing flow rates of the reactive mixture according to the specific positions progressively reached by said one or more mixing heads (50).

22. Method according to claim 20 or 21, wherein the position and movement of said one or more mixing heads (50) are programmed to start a first dispensing step nearer the outer section (Z2) (opposite the inlet section Z1) and continue and complete the dispensing by moving said mixing head/s (50) to the inlet section in said foaming station (F_{S}) for said refrigerator cabinet (2) while the programmed driving of said removal device (28) is simultaneously provided so as to progressively reclose said refrigerator cabinet (2) with the backrest (51) supported by said upper contrast panel (11) in a synchronized manner, following the movement of said one or more mixing heads (50), progressively moving said backrest (51) to cover the zones that have already been reached by the dispensing of reactive mixture in the expansion step.

23. Method according to claim 17 or 18, wherein, by said one or more mixing heads (50) installed on supports that are movable and positionable in a programmed manner above in said foaming station (F_{S}), an injecting step is performed of injecting reactive mixture for face-down foaming of the refrigerator cabinet (2), wherein said injecting step occurs in closed mould configuration and there is provided for introducing the dispensing duct/s of said one or more mixing heads (50) in through injection openings obtained on said top contrast panel (11) and in corresponding injection holes made on the outer shell portion that acts as the rear backrest (51) for the refrigerator, so as to enable the closed mould reactive mixture to be dispensed or injected inside the refrigerator cabinet (2) placed in face down position.

24. Method according to the preceding claim, wherein for closed mould foaming, in said foaming jig, in the closed condition, a certain vacuum degree is generated by air suction to perform vacuum-foaming of said refrigerator cabinet (2).

## Patentansprüche

1. Einrichtung zum Verschäumen eines Kühlschranks (2) mittels eines reaktiven Polyurethangemisches, das in Hohlwände (3) des Kühlschranks (2) eingespritzt wird, wobei die Einrichtung (1) Folgendes umfasst:
- eine Struktur (4), die eine Verschäumungsstation (Fs) definiert und mit einer oberen Gegenplatte (11) bereitgestellt ist, um der Druckkraft des ausdehnenden Gemisches für den Kühlschrank (2) entgegenzuwirken,
- einen oder mehrere Mischköpfe (50), die dazu ausgebildet sind, das reaktive Polyurethangemisch in den Kühlschrank (2) abzugeben, wobei der eine oder die mehreren Mischköpfe (50) auf eine programmierte Weise in einem oberen Areal der Verschäumungsstation (F_{S}) verteilt, positionierbar und bewegbar sind,
- eine Beförderungseinheit (5), die sich von einer Belade-/Entladezone (Z1) für die Kühlschränke (2) bis in die Struktur (4) hinein erstreckt, um den Kühlschrank (2) in der Verschäumungsstation (Fs) zu positionieren,
- einen Ablagetisch (6), der von der Beförderungseinheit (5) zwischen der Belade-/Entladezone (Z1) und der Verschäumungsstation (Fs) bewegbar ist und so geformt ist, den Kühlschrank (2) mit dem Hohlraum nach unten zeigend zu stützen, wobei auf dem Ablagetisch (6) zumindest ein männliches Element positionierbar ist, um von innen der Druckkraft des sich ausdehnenden Gemisches entgegenzuwirken, wobei das männliche Element gemeinsam mit dem Ablagetisch (6) bewegbar ist und mit dem Kühlschrank (2) in der Belade-/Entladezone (Z1) außerhalb der Verschäumungsstation (F_{S}) eingreifen und davon gelöst werden kann,
- auf dem Ablagetisch (6) ein Paar entgegengesetzter erster Gegenwände (7), die angebracht sind, um dem Schub des sich ausdehnenden Gemisches entgegenzuwirken, durch Scharnierelemente (36) drehbar bewegbar und geformt sind, von außen an dem Kühlschrank (2) von zwei entgegengesetzten Seiten eine Gegenwirkung auf das sich ausdehnende Gemisch auszuüben;
- ein Paar entgegengesetzter zweiter Gegenwände (8), die auf der Struktur (4) angebracht sind und geformt sind, von außen an dem Kühlschrank (2), von zwei weiteren entgegengesetzten Seiten, eine jeweilige Gegenwirkung auszuüben, um der Druckkraft des sich ausdehnenden Gemisches entgegenzuwirken, wobei die entgegengesetzten zweiten Gegenwände (8) in der Verschäumungsstation (Fs) gemeinsam mit der oberen Gegenplatte (11) eine Tunnelkammer definieren, in die der Kühlschrank (2) durch Fortbewegung des Ablagetisches (6) einführbar ist,
- Auflage- und Haltemittel (34) zur gegenseitigen Kopplung des Ablagetisches (6) mit den zweiten Gegenwänden (8) und
- eine Hebevorrichtung (9), die dazu ausgebildet ist, den Ablagetisch (6) mit dem Kühlschrank (2) von der Beförderungseinheit (5) zu heben, um den Ablagetisch (6) dazu zu bringen, reziprok an unteren Oberflächen (10) der zweiten Gegenwände (8) anzuliegen und die ersten Gegenwände (7) dazu zu bringen, reziprok an der oberen Gegenwand (11) anzuliegen, um ein Verschäumungshaltegestell zu definieren, innerhalb dessen der Kühlschrank (2) eingeschlossen ist, wobei
- die Hebevorrichtung (9) dazu ausgebildet ist, den Ablagetisch (6) entlang eines Hebe-/Senkhubs (S) zu verschieben, der verglichen mit der Höhe (H) der ersten Gegenwände (7) und der zweiten Gegenwände (8) erheblich verringert ist, mit einer folglich stark begrenzten Verschiebungszeit,
- der Hebe-/Senkhub (S) eine verringerte, aber ausreichende Länge hat, um dem Ablagetisch (6) und den zweiten Gegenwänden (8) zu ermöglichen, sich durch die Auflage- und Haltemittel (34) reziprok zu koppeln/entkoppeln.

2. Einrichtung nach Anspruch 1, wobei die Hebevorrichtung (9) Stabmittel (12A, 12B) oder horizontale Balkenmittel umfasst, die vertikal bewegbar sind, parallel zueinander bleiben und miteinander durch einen angelenkten Verbindungsstangenmechanismus (13) verbunden sind, der durch Aktormittel (14) antreibbar ist.

3. Einrichtung nach Anspruch 2, wobei der angelenkte Verbindungsstangenmechanismus Paare verteilter Verbindungsstangen (13) umfasst, wobei jedes Paar Verbindungsstangen eine erste Verbindungsstange (13A) und eine zweite Verbindungsstange (13B) umfasst, die an einem angelenkten Verbindungsende (15) aneinander scharniert sind, um zu ihrer Synchronisation miteinander durch Stifte in einem Verbindungspunkt mit einem Mittelstab (12B) verbunden zu sein, wobei ein unteres Ende (16) der ersten Verbindungsstange (13A) an einen fixierten Teil (17) der Struktur (4) scharniert ist und wobei ein oberes Ende (18) der zweiten Verbindungsstange (13B) an obere Stäbe (12A) scharniert ist, die vertikal bewegbar und in der Hebevorrichtung (9) beinhaltet sind.

4. Einrichtung nach Anspruch 3, wobei der angelenkte Verbindungsstangenmechanismus so ausgebildet ist, dass die Verbindungsstangen (13) jedes Paars von einer ersten ausgerichteten Position, entsprechend einer gesenkten Position (Lp) des Ablagetisches (6), in der diese Verbindungsstangen (13) zueinander geneigt sind, zu einer zweiten ausgerichteten Position, entsprechend einer angehobenen Position (R_{P}) des Ablagetisches (6), in der die Verbindungsstangen (13) jedes Paares zueinander axial ausgerichtet und parallel zu der Hebe-/Senkrichtung (D_{RL}) ausgerichtet sind, d.h. orthogonal in Bezug auf die Ebene entlang derer sich der Ablagetisch (6) erstreckt, bewegbar sind, wobei die Verbindungsstangen (13) kinematisch eingerichtet sind, um die Aufwärtsbewegung des Ablagetisches (6) vor dem finalen Schlusskontakt des Verschäumungshaltegestells zu bremsen, wobei diese Verbindungsstangen (13) als eine Strebe agieren und eine Stoppfunktion durchzuführen, um den Ablagetisch (6) in der angehobenen Position (R_{P}) zu sichern.

5. Einrichtung nach Anspruch 3 oder 4, wobei das Stabmittel Bewegungsübertragungsstäbe (12B) umfasst, mit denen die angelenkten Verbindungsenden (15) der Paare von Verbindungsstangen (13) schwenkbar verbunden sind, wobei die Bewegungsübertragungsstäbe (12B) horizontal und vertikal unter der Wirkung des Aktormittels (14) bewegbar sind, um die Neigung der Verbindungsstangen (13) zu variieren und ein Heben/Senken der oberen Stäbe (12A) zu veranlassen, wobei Spitzenelemente (19), die nach oben vorragen, an den oberen Stäben (12A) fixiert sind, so geformt, über die Beförderungseinheit (5) hochzustehen, um mit dem Ablagetisch (6) in Kontakt zu kommen und ihn entlang des Hubs (S) zu heben, und wobei eine Einstellungsvorrichtung (20) bereitgestellt ist, die dazu ausgebildet ist, den reziproken Abstand der zweiten Gegenwände (8) zu variieren, um die unterschiedlichen Breiten (L) eines Kühlschranks (2) anzupassen, wobei die Einstellungsvorrichtung (20) mit einem Schraubenmuttergetriebemechanismus (21) bereitgestellt ist, der durch einen Elektromotor (22) antreibbar ist, um die Position einer jeweiligen zweiten Gegenwand (8) zu variieren, und wobei die Einstellungsvorrichtung (20) eine Antriebswelle (23) umfasst, die vom Elektromotor (22) antreibbar ist und wobei der Getriebemechanismus (21) Schraubmittel (25) umfasst, die mit einer jeweiligen Gegenwand (8) verbunden sind, wobei auf der Antriebswelle (23) erste konische Zahnräder (24) eingesetzt sind, die dazu ausgebildet sind, mit zweiten konischen Zahnrädern (26), die auf den Schraubmitteln (25) eingesetzt sind, einzugreifen und diese zu drehen, wobei die Schraubmittel (25) mit einem oder mehreren stationären Schraubmutterblöcken (27), die an der Struktur (4) fixiert sind, eingreifen, wobei die Drehung der Schraubmittel (25), die von der Antriebswelle (23) betrieben wird, eine Verschiebung der Gegenwand (8) entlang einer Richtung (T) bestimmt, die quer zu einer Fortbewegungsrichtung (A) der Beförderungseinheit (5) ist.

6. Einrichtung nach einem der vorstehenden Ansprüche, umfassend eine Entfernungsvorrichtung (28), die dazu ausgebildet ist, die obere Gegenplatte (11) zu entfernen und von der Verschäumungsstation (Fs) zu einer Außenzone (Z2) zu übertragen, um Zugang zur oberen Gegenplatte (11) zu erleichtern und mögliche Einstellungen/Austausche daran zu gestatten.

7. Einrichtung nach einem vorstehenden Anspruch, weiter umfassend Greifmittel (32), das dazu ausgebildet ist, von dem Kühlschrank (2) einen Außenhüllenabschnitt zu trennen, der dazu gedacht ist, als eine Rückenstütze (51) für den Kühlschrank bei seiner normalen Verwendung zu dienen, wobei das Greifmittel (32) durch die Entfernungsvorrichtung (28) von der Verschäumungsstation (Fs) zu der Außenzone (Z2) bewegbar ist.

8. Einrichtung nach dem vorstehenden Anspruch, wobei das Greifmittel (32) an der oberen Gegenplatte (11) angebracht ist und von der Art ist, die Magnetmittel und/oder Saugglockenmittel und/oder Greifmittel durch Luftsog und/oder gleichwertige Mittel umfasst.

9. Einrichtung nach einem oder mehreren der vorstehenden Ansprüche, wobei die Außenzone (Z2) an der entgegengesetzten Seite zu der Belade-/Entladezone (Z1) in Bezug auf die Verschäumungsstation (Fs) liegt.

10. Einrichtung nach einem der vorstehenden Ansprüche, wobei die zweiten Gegenwände (8) von vertikalen Stehern (38) gestützt werden, die oben mit der Struktur (4) verbunden sind und nach unten vorragen, wobei die zweiten Gegenwände (8) mit den vertikalen Stehern (38) durch winzige Verbindungsstangen (39) verbunden sind, die eine kleine Verschiebung in der horizontalen und vertikalen Richtung der zweiten Gegenwände (8) gestatten, und wobei das Auflage- und Haltemittel Aufnahmeelemente 34A umfasst, die an dem Ablagetisch 6 angebracht sind, und Einsatzabschnitte 34B, die an den vertikalen Stehern 38 bereitgestellt sind und so geformt sind, in den Aufnahmeelementen (34A) aufgenommen zu werden und damit einzugreifen, wobei die Position der Aufnahmeelemente (34A) einstellbar ist, um sich an die Position der zweiten Gegenwände (8) gemäß der Breite des Kühlschranks (2) anzupassen.

11. Einrichtung nach einem der vorstehenden Ansprüche, wobei die ersten Gegenwände (7) mit dem Ablagetisch (6) durch eine Verbindung verbunden sind, die eine Positionseinstellung zulässt, um sich an unterschiedliche Abmessungen des Kühlschranks (2) anzupassen, wobei hydraulische oder pneumatische Aktormittel (37) bereitgestellt sind, die dazu ausgebildet sind, die ersten Gegenwände (7) von einer gelösten Position zu einer Position in Eingriff mit dem Kühlschrank (2) zu drehen.

12. Einrichtung nach einem der vorstehenden Ansprüche, umfassend Dichtungsmittel, die entlang der Umfangskanten der ersten (7) und zweiten Gegenwände (8) eingerichtet sind, dazu ausgebildet, in dem geschlossenen Zustand des Verschäumungshaltegestells die Erzeugung eines gewissen Grads von Vakuum darin zu gestatten, um Vakuumverschäumung des Kühlschranks (2) durchzuführen.

13. Einrichtung nach einem der vorstehenden Ansprüche, wobei der eine oder die mehreren Mischköpfe (50) auf Stützen installiert sind, die auf eine programmierte Weise zur nach unten gerichteten Verschäumung des Kühlschranks (2) bewegbar und positionierbar sind, sowohl in der geschlossenen Gussformkonfiguration, in der der Kühlschrank (2) mit dem Außenhüllenabschnitt bereitgestellt ist, der als eine Rückstütze (51) für den Kühlschrank dient, als auch in der offenen Gussformkonfiguration, in der der Außenhüllenabschnitt, der als eine Rückenstütze (51) dient, zuvor von dem Kühlschrank (2) entfernt wurde.

14. Einrichtung nach Anspruch 13, wobei in der oberen Kontrastplatte (11) Einspritzdurchgangsöffnungen erhalten sind, durch die der/die Ausgabeleitung/-en des einen oder der mehreren Mischköpfe (50) in entsprechende Einspritzlöcher einlangen und eingesetzt werden können, die an dem Außenhüllenabschnitt hergestellt sind, der als die Rückenstütze (51) für den Kühlschrank dient, um die Ausgabe und/oder Einspritzung des reaktiven Gemisches innerhalb des Kühlschranks (2) zu gestatten.

15. Einrichtung nach einem der vorstehenden Ansprüche, weiter umfassend eine Steuereinheit (U_{C}) zum Steuern und Bewegen, mittels Schlittenbewegungsvorrichtungen gemäß zwei horizontalen Achsen (X) und (Y) durch Interpolation und einer vertikalen Achse (Z) oder durch einen anthropomorphen Roboter, des einen oder der mehreren Mischköpfe (50) auf eine programmierte Weise durch Interpolation im Raum, wobei die Steuereinheit (U_{C}) dazu ausgebildet ist, den Start- und Stoppschritt vom Ausgeben und die Ausgaberaten des reaktiven Gemisches gemäß den spezifischen Positionen, die von dem einen oder den mehreren Mischköpfen (50) erreicht werden, zu programmieren, steuern und synchronisieren, wobei die interpolierten Positionen und Geschwindigkeiten durch die Steuereinheit (U_{C}) programmierbar sind und so sind, mit der Bewegung der Köpfe (50) die gesamte obere Oberfläche der Rückseite des Bereichs des Kühlschranks (2) abzudecken.

16. Einrichtung nach dem vorstehenden Anspruch, wobei die Steuereinheit (U_{C}) in dem offenen Gussformverschäumungsmodus dazu ausgebildet ist, Positionieren und Bewegen des einen oder der mehreren Mischköpfe (50) während Ausgebens zu programmieren, um einen ersten Ausgabeschritt näher beim Außenbereich (Z2) (gegenüber dem Einlassbereich Z1) zu starten und das Ausgeben durch Bewegen des Kopfs (_{der Köpfe}) zu dem Einlassbereich in der Verschäumungsstation (Fs) für den Kühlschrank (2) fortzusetzen und abzuschließen, während gleichzeitig die Entfernungsvorrichtung (28) von der Steuereinheit (U_{C}) programmiert, gesteuert und betrieben wird, um den Kühlschrank (2) schrittweise mit der Rückenstütze (51), die von der oberen Gegenplatte (11) gestützt wird, auf eine synchronisierte Weise wieder zu verschließen, gefolgt von der Bewegung des einen oder der mehreren Mischköpfe (50), wobei die Rückenstütze (51) bewegt wird, um die Zonen abzudecken, wenn die Zonen von der Ausgabe eines sich schrittweise ausdehnenden, reaktiven Gemisches erreicht wurden.

17. Verfahren zum Verschäumen eines Kühlschranks (2) mittels eines reaktiven Polyurethangemisches, das in Hohlwände (3) des Kühlschranks eingespritzt wird, umfassend die folgenden Schritte:
- Positionieren, in einer Belade-/Entladezone (Z1), des Kühlschranks (2), mit dem Einlass des Hohlraums nach unten zeigend, auf einem Ablagetisch (6), der zumindest ein männliches Element trägt, das geeignet ist, der Druckkraft des sich ausdehnenden Gemisches innen entgegenzuwirken,
- Drehen eines Paares erster Gegenwände (7) gegen den Kühlschrank (2), um von der Außenseite an dem Kühlschrank (2) von zwei entgegengesetzten Seiten eine Gegenwirkung gegen die Druckkraft des sich ausdehnenden Gemisches auszuüben;
- Einrichten, innerhalb einer Verschäumungsstation (Fs), eines Paares zweiter Gegenwände (8), die von einer Struktur (4) darüber gestützt werden, wobei die zweiten Gegenwände (8) so geformt sind, von der Außenseite an dem Kühlschrank (2), von zwei weiteren entgegengesetzten Seiten, eine jeweilige Gegenwirkung gegen die Druckkraft des sich ausdehnenden Gemisches auszuüben;
- Übertragen, durch eine Beförderungseinheit (5), des Ablagetisches (6), der den Kühlschrank (2) trägt, von der Belade-/Entladezone (Z1) zu der Verschäumungsstation (Fs),
- Verschieben, durch eine Hebevorrichtung (9), des Ablagetisches (6), der den Kühlschrank (2) trägt, nach oben, durch einen Hub (S), der verglichen mit der Höhe (H) der ersten Gegenwände (7) und der zweiten Gegenwände (8) erheblich verringert ist, um
- reziprok an dem Ablagetisch (6) mit unteren Oberflächen (10) der zweiten Gegenwände (8) anzuliegen und reziprok an den ersten Gegenwänden (7) mit einer oberen Gegenplatte (11) anzuliegen, um ein Verschäumungshaltegestell zu definieren, innerhalb dessen der zu verschäumende Kühlschrank (2) eingeschlossen ist;
- Ausgeben des reaktiven Gemisches innerhalb der Hohlwände (3) des Kühlschranks (2) durch einen oder mehrere Mischköpfe (50), die auf eine programmierte Weise positionierbar und bewegbar sind.

18. Verfahren nach dem vorstehenden Anspruch, wobei, vor Ausgeben des reaktiven Gemisches, die Position der ersten (7) Gegenwände auf dem Ablagetisch (6) eingestellt wird, und der reziproke Abstand der zweiten Gegenwände (8) eingestellt wird, um die Abmessungen des Kühlschranks (2) einzustellen, und wobei, durch eine Entfernungsvorrichtung (28), die obere Gegenplatte (11) entfernt wird und von der Verschäumungsstation (F_{S}) zu einer Außenzone (Z2) übertragen wird, um Zugang zu der oberen Gegenplatte (11) zu erleichtern und mögliche Einstellungen/Austausche daran zu erleichtern.

19. Verfahren nach dem vorstehenden Anspruch, wobei durch Greifmittel (32), die auf der oberen Gegenplatte (11) bereitgestellt sind, und durch die Entfernungsvorrichtung (28) ein Außenhüllenabschnitt des Kühlschranks (2) ergriffen wird, der als die Rückenstütze (51) für den Kühlschrank dient und von dem Kühlschrank (2) getrennt ist, der zu der Außenzone (Z2) zu bringen ist, um den Kühlschrank (2) an der Oberseite offen zu lassen.

20. Verfahren nach dem vorstehenden Anspruch, wobei nach Entfernen der Rückenstütze (51) von dem Kühlschrank (2) - durch den einen oder die mehreren Mischköpfe (50), die auf eine programmierte Weise in einem oberen Areal der Verschäumungsstation (F_{S}) positioniert und bewegt werden - Ausgeben darüber auf eine synchronisierte Weise eines oder mehrerer Flüsse vom reaktiven Gemisch innerhalb des Kühlschranks (2), der in der nach unten zeigenden Position eingerichtet ist, bereitgestellt wird, um offene Gussformverschäumung in der nach unten zeigenden Konfiguration durchzuführen, und wobei durch eine Steuereinheit (U_{C}) der eine oder die mehreren Mischköpfe (50) von schlittenbewegten Vorrichtungen gemäß zwei horizontalen Achsen (X) und (Y) durch Interpolation und eine vertikale Achse (Z) oder durch einen anthropomorphen Roboter gestützt, auf eine programmierte Weise durch Interpolation im Raum bewegt werden.

21. Verfahren nach Anspruch 20, wobei für den einen oder die mehreren Mischköpfe (50) die relativen Positionen und interpolierten Geschwindigkeiten von der Steuereinheit (U_{C}) programmiert werden, um mit der Bewegung der Köpfe (50) die gesamte obere Oberfläche oder die Rückseite des Kühlschranks (2) abzudecken und den Start- und Stoppschritt vom Ausgeben und die Ausgabeflussraten des reaktiven Gemisches gemäß der bestimmten Positionen, die schrittweise von dem einen oder den mehreren Mischköpfen (50) erreicht werden, zu steuern und synchronisieren.

22. Verfahren nach Anspruch 20 oder 21, wobei die Position und Bewegung des einen oder der mehreren Mischköpfe (50) programmiert sind, einen ersten Ausgabeschritt näher bei dem Außenbereich (Z2) (gegenüber dem Einlassbereich Z1) zu starten und das Ausgeben durch Bewegen des/der Mischkopfs/Mischköpfe (50) zu dem Einlassbereich in der Verschäumungsstation (F_{S}) für den Kühlschrank (2) fortzusetzen und abzuschließen, während das programmierte Antreiben der Entfernungsvorrichtung (28) gleichzeitig bereitgestellt wird, um schrittweise den Kühlschrank (2) mit der Rückenstütze (51), die von der oberen Gegenplatte (11) gestützt wird, auf eine synchronisierte Weise wieder zu verschließen, der Bewegung des einen oder der mehreren Mischköpfe (50) folgend, wobei die Rückenstütze (51) schrittweise bewegt wird, die Zonen abzudecken, die bereits von der Ausgabe des reaktiven Gemischs in dem Ausdehnungsschritt erreicht wurden.

23. Verfahren nach Anspruch 17 oder 18, wobei, durch einen oder mehrere Mischköpfe (50), die auf Stützen installiert sind, die auf eine programmierte Weise darüber in der Verschäumungsstation (F_{S}) bewegbar und positionierbar sind, ein Einspritzschritt zum Einspritzen von reaktivem Gemisch für nach unten zeigende Verschäumung des Kühlschranks (2) durchgeführt wird, wobei der Einspritzschritt in einer geschlossenen Gussformkonfiguration stattfindet und zum Einleiten der Ausgabeleitung/- en des einen oder der mehreren Mischköpfe (50) in Einspritzdurchgangsöffnungen, die auf der oberen Gegenplatte (11) erhalten sind, und in entsprechende Einspritzlöcher, die auf dem Außenhüllenabschnitt hergestellt sind, der als die Rückenstütze (51) für den Kühlschrank dient, bereitgestellt ist, um dem reaktiven Gemisch für geschlossene Gussformen innerhalb des Kühlschranks (2), der in einer nach unten zeigenden Position platziert ist, zu ermöglichen, ausgegeben oder eingespritzt zu werden.

24. Verfahren nach dem vorstehenden Anspruch, wobei zur geschlossenen Gussformverschäumung, in dem Verschäumungshaltegestell in dem geschlossenen Zustand ein gewisser Grad von Vakuum durch Luftsog erzeugt wird, um Vakuumverschäumung des Kühlschranks (2) durchzuführen.

## Revendications

1. Appareil pour réaliser le moussage d'une armoire frigorifique (2) au moyen d'un mélange réactif de polyuréthanne qui est injecté dans des parois creuses (3) de ladite armoire frigorifique (2), ledit appareil (1) comprenant :
- une structure (4) définissant un poste de moussage (Fs) et pourvue d'un panneau d'opposition supérieur (11) pour contrecarrer la poussée du mélange en expansion pour ladite armoire frigorifique (2),
- une ou plusieurs têtes de mélange (50) configurées pour distribuer le mélange réactif de polyuréthanne dans ladite armoire de réfrigération (2), lesdites une ou plusieurs têtes de mélange (50) étant réparties, positionnables et mobiles de manière programmée dans une région supérieure dudit poste de moussage (Fs),
- une unité de transport (5) qui s'étend d'une zone de chargement/déchargement (Z1) des armoires frigorifique (2), jusqu'aussi loin que l'intérieur de ladite structure (4) pour positionner l'armoire frigorifique (2) dans ledit poste de moussage (Fs).
- une table de support (6), qui est mobile par l'intermédiaire de ladite unité de transport (5) entre ladite zone de chargement/déchargement (Z1) et ledit poste de moussage (F_{S}) et mise en forme pour supporter ladite armoire frigorifique (2) avec la cavité orientée vers le bas, sur ladite table de support (6), au moins un élément mâle étant positionnable pour contrecarrer depuis l'intérieur la poussée dudit mélange en expansion, ledit élément mâle étant mobile conjointement avec ladite table de support (6) et pouvant venir en prise avec et se libérer de ladite armoire frigorifique (2) dans ladite zone de chargement/déchargement (Z1) à l'extérieur dudit poste de moussage (Fs),
- sur ladite table de support (6), une paire de premières parois d'opposition opposées (7) étant montées pour contrecarrer la poussée du mélange en expansion, mobiles en rotation par l'intermédiaire d'éléments d'articulation (36), et mises en forme pour exercer depuis l'extérieur sur ladite armoire frigorifique (2) à partir de deux côtés opposés une action antagoniste sur le mélange en expansion ;
- une paire de secondes parois d'opposition opposées (8) étant montées sur ladite structure (4) et mises en forme pour exercer depuis l'extérieur sur ladite armoire frigorifique (2), à partir de deux côtés opposés supplémentaires, une action antagoniste respective pour contrecarrer la poussée dudit mélange en expansion, dans lequel lesdites secondes parois d'opposition opposées (8) définissent, dans ledit poste de moussage (Fs), conjointement avec ledit panneau d'opposition supérieur (11), une chambre tunnel dans laquelle ladite armoire frigorifique (2) peut être introduite en faisant avancer ladite table de support (6),
- des moyens de butée et de maintien (34) pour un couplage mutuel de ladite table de support (6) avec lesdites secondes parois d'opposition (8) et
- un dispositif de levage (9) configuré pour lever ladite table de support (6) avec ladite armoire frigorifique (2) depuis ladite unité de transport (5) afin d'amener ladite table de support (6) en butée réciproquement sur des surfaces inférieures (10) desdites secondes parois d'opposition (8) et d'amener lesdites premières parois d'opposition (7) en butée réciproquement avec ledit panneau d'opposition supérieur (11), de manière à définir un gabarit de moussage à l'intérieur duquel ladite armoire frigorifique (2) est enfermée, dans lequel
- ledit dispositif de levage (9) est configuré pour déplacer ladite table de support (6) en translation selon une course de levage/abaissement (S) qui est considérablement réduite par comparaison à la hauteur (H) desdites premières parois d'opposition (7) et desdites secondes parois d'opposition (8), avec un temps de translation très limité résultant,
- ladite course de levage/abaissement (S) étant de longueur réduite mais suffisante pour permettre à ladite table de support (6) et auxdites secondes parois d'opposition (8) de se coupler/désaccoupler réciproquement par l'intermédiaire desdits moyens de butée et de maintien (34).

2. Appareil selon la revendication 1, dans lequel ledit dispositif de levage (9) comprend des moyens de barres (12A, 12B) ou des moyens de poutres horizontales, mobiles verticalement, restant parallèles entre elles et mutuellement reliées par un mécanisme à bielles articulées (13) pouvant être entraîné par des moyens d'actionnement (14).

3. Appareil selon la revendication 2, dans lequel ledit mécanisme à bielles articulées comprend des paires de bielles réparties (13), chaque paire de bielles comprenant une première bielle (13A) et une seconde bielle (13B) mutuellement articulées à une extrémité de liaison articulée (15), de manière à être reliées ensemble dans une articulation de liaison par des broches à une barre centrale (12B) pour leur synchronisation, dans lequel une extrémité inférieure (16) de ladite première bielle (13A) est articulée sur une partie fixe (17) de ladite structure (4), et dans lequel une extrémité supérieure (18) de ladite seconde bielle (13B) est articulée sur des barres supérieures (12A) mobiles verticalement et incluses dans ledit dispositif de levage (9).

4. Appareil selon la revendication 3, dans lequel ledit mécanisme à bielles articulées est configuré de telle sorte que les bielles (13) de chaque paire sont mobiles depuis une première position orientée, correspondant à une position abaissée (L_{P}) de ladite table de support (6), dans laquelle ces bielles (13) sont inclinées mutuellement, vers une seconde position orientée, correspondant à une position levée (R_{P}) de ladite table de support (6), dans laquelle les bielles (13) de chaque paire sont mutuellement alignées axialement et agencées parallèlement à la direction de levage/abaissement (D_{RL}), c'est-à-dire orthogonalement par rapport au plan le long duquel s'étend ladite table de support (6), les bielles (13) étant agencées de manière cinématique pour ralentir le déplacement ascendant de ladite table de support (6) avant le contact final de fermeture du gabarit de moussage, ces bielles (13) étant telles qu'elles jouent le rôle d'entretoise et remplissent une fonction de butée pour fixer ladite table de support (6) dans ladite position levée (R_{P}).

5. Appareil selon la revendication 3 ou 4, dans lequel lesdits moyens de barres comprennent des barres de transfert de mouvement (12B) auxquelles les extrémités de liaison articulées (15) desdites paires de bielles (13) sont reliées de manière pivotante, lesdites barres de transfert de mouvement (12B) étant mobiles horizontalement et verticalement sous l'action desdits moyens d'actionnement (14) pour faire varier l'inclinaison desdites bielles (13) et provoquer un levage/abaissement desdites barres supérieures (12A), dans lequel des éléments de pointe (19), faisant saillie vers le haut, sont fixés auxdites barres supérieures (12A), mis en forme de manière à émerger au-dessus de ladite unité de transport (5) afin de venir en contact avec et de lever ladite table de support (6) le long de ladite course (S), et dans lequel un dispositif d'ajustement (20) est prévu, qui est configuré pour faire varier la distance réciproque desdites secondes parois d'opposition (8) afin de s'adapter à différentes largeurs (L) d'une armoire frigorifique (2), ledit dispositif de réglage (20) étant pourvu d'un mécanisme de transmission à vis-écrou (21) qui peut être entraîné par un moteur électrique (22), pour faire varier la position d'une seconde paroi d'opposition respective (8), et dans lequel ledit dispositif d'ajustement (20) comprend un arbre d'entraînement (23) qui peut être entraîné par ledit moteur électrique (22), et dans lequel ledit mécanisme de transmission (21) comprend des moyens à vis (25) reliés à une paroi d'opposition respective (8), des premières roues dentées coniques (24) étant verrouillées sur ledit arbre d'entraînement (23), qui sont configurées pour engrener avec et faire tourner des secondes roues dentées coniques (26) verrouillées sur lesdits moyens à vis (25), lesdits moyens à vis (25) venant en prise avec un ou plusieurs blocs d'écrou de vis fixes (27), fixés à ladite structure (4), la rotation desdits moyens à vis (25) actionnés par ledit arbre d'entraînement (23) déterminant un déplacement de la paroi d'opposition (8) le long d'une direction (T) qui est transversale à une direction d'avance (A) de ladite unité de transport (5)

6. Appareil selon l'une quelconque des revendications précédentes, comprenant un dispositif de retrait (28) configuré pour retirer et transférer ledit panneau d'opposition supérieur (11) dudit poste de moussage (F_{S}) vers une zone extérieure (Z2) afin de faciliter un accès à, et de permettre des ajustements/remplacements possibles sur ledit panneau d'opposition supérieur (11).

7. Appareil selon l'une quelconque des revendications précédentes, comprenant en outre des moyens de préhension (32) configurés pour séparer de ladite armoire frigorifique (2) une partie de coque extérieure destinée à agir comme un dossier arrière (51) pour le réfrigérateur lors d'une utilisation normale de celui-ci, dans lequel lesdits moyens de préhension (32) sont mobiles, par l'intermédiaire dudit dispositif de retrait (28), dudit poste de moussage (Fs) vers ladite zone extérieure (Z2).

8. Appareil selon la revendication précédente, dans lequel lesdits moyens de préhension (32) sont montés sur ledit panneau d'opposition supérieur (11) et sont du type comprenant des moyens d'aimant et/ou des moyens de ventouse et/ou des moyens de préhension par aspiration d'air et/ou des moyens équivalents.

9. Appareil selon une ou plusieurs des revendications précédentes, dans lequel ladite zone extérieure (Z2) est située du côté opposé à ladite zone de chargement/déchargement (Z1) par rapport audit poste de moussage (Fs).

10. Appareil selon l'une quelconque des revendications précédentes, dans lequel lesdites secondes parois d'opposition (8) sont supportées par des montants verticaux (38) reliés au-dessus à ladite structure (4) et faisant saillie vers le bas, lesdites secondes parois d'opposition (8) étant reliées auxdits montants verticaux (38) par de minuscules bielles (39) qui permettent un petit déplacement dans la direction horizontale et verticale desdites secondes parois d'opposition (8), et dans lequel lesdits moyens de butée et de maintien comprennent des éléments de siège 34A, montés sur ladite table de support 6, et des parties d'insertion 34B prévues sur les montants verticaux 38 et formées pour être reçues dans et venir en prise avec lesdits éléments de siège (34A), la position desdits éléments de siège (34A) étant ajustable pour s'adapter à la position desdites secondes parois d'opposition (8) selon la largeur de l'armoire frigorifique (2).

11. Appareil selon l'une quelconque des revendications précédentes, dans lequel lesdites premières parois d'opposition (7) sont reliées à ladite table de support (6) par une liaison qui permet un ajustement de position pour s'adapter à différentes dimensions de l'armoire frigorifique (2), des moyens d'actionnement hydraulique ou pneumatique (37) étant prévus qui sont configurés pour faire tourner lesdites premières parois d'opposition (7) d'une position libérée vers une position en prise avec l'armoire frigorifique (2).

12. Appareil selon l'une quelconque des revendications précédentes, comprenant des moyens d'étanchéité agencés le long des bords périphériques desdites premières (7) et secondes parois d'opposition (8), configurés pour permettre, à l'état fermé dudit gabarit de moussage, la génération d'un certain degré de vide en leur sein, afin d'effectuer un moussage sous vide de ladite armoire frigorifique (2).

13. Appareil selon l'une quelconque des revendications précédentes, dans lequel lesdites une ou plusieurs têtes de mélange (50) sont installées sur des supports qui sont mobiles et positionnables de manière programmée pour un moussage face vers le bas de l'armoire frigorifique (2) à la fois dans la configuration de moule fermée, dans laquelle ladite armoire frigorifique (2) est pourvue de la partie de coque extérieure qui agit comme un dossier arrière (51) pour le réfrigérateur, et dans la configuration de moule ouverte, dans laquelle ladite partie de coque extérieure qui agit comme un dossier arrière (51) a été préalablement retiré de ladite armoire frigorifique (2).

14. Appareil selon la revendication 13, dans lequel, dans ledit panneau d'opposition supérieur (11), des ouvertures d'injection traversantes sont obtenues, à travers lesquelles les un ou plusieurs conduits de distribution desdites une ou plusieurs têtes de mélange (50) peuvent s'intercepter et s'insérer dans des trous d'injection correspondants ménagés sur la partie de coque extérieure qui agit comme dossier arrière (51) pour le réfrigérateur, de manière à permettre la distribution et/ou l'injection du mélange réactif à l'intérieur de l'armoire frigorifique (2).

15. Appareil selon l'une quelconque des revendications précédentes, comprenant en outre une unité de commande (U_{C}) pour commander et déplacer, au moyen de dispositifs de déplacement de chariot selon deux axes horizontaux (X) et (Y) par interpolation et un axe vertical (Z) ou par un robot anthropomorphe, lesdites une ou plusieurs têtes de mélange (50) de manière programmée par interpolation dans l'espace, dans lequel ladite unité de commande (U_{C}) est configurée pour programmer, commander et synchroniser les étapes de distribution de démarrage et d'arrêt et les débits de distribution du mélange réactif selon les positions spécifiques atteintes par lesdites une ou plusieurs têtes de mélange (50) dont les positions et vitesses interpolées sont programmables par ladite unité de commande (U_{C}) et sont telles qu'elles couvrent, avec le déplacement des têtes (50), toute la surface supérieure ou le côté arrière de la section de ladite armoire frigorifique (2).

16. Appareil selon la revendication précédente, dans lequel ladite unité de commande (U_{C}), dans le mode de moussage en moule ouvert, est configurée pour programmer un positionnement et un déplacement desdites une ou plusieurs têtes de mélange (50), pendant une distribution, pour démarrer une première étape de distribution plus près de la section extérieure (Z2) (opposée à la section d'entrée Z1) et pour poursuivre et terminer la distribution en déplaçant ladite tête (_{S}) vers la section d'entrée dans ledit poste de moussage (F_{S}) pour ladite armoire frigorifique (2) tandis que, simultanément, ledit dispositif de retrait (28) est programmé, commandé et actionné par ladite unité de commande (U_{C}) de manière à refermer progressivement ladite armoire frigorifique (2) avec le dossier (51) supporté par ledit panneau d'opposition supérieur (11) de manière synchronisée, suivant le déplacement desdites une ou plusieurs têtes de mélange (50), ledit dossier (51) étant déplacé pour couvrir les zones au fur et à mesure que les zones ont été atteintes par la distribution d'un mélange réactif en expansion progressivement.

17. Procédé de moussage d'une armoire frigorifique (2) au moyen d'un mélange réactif de polyuréthanne qui est injecté dans des parois creuses (3) de ladite armoire frigorifique, comprenant les étapes consistant à :
- positionner, dans une zone de chargement/déchargement (Z1), ladite armoire frigorifique (2) avec l'entrée de la cavité orientée vers le bas, sur une table de support (6) portant au moins un élément mâle qui est apte à contrecarrer intérieurement la poussée du mélange en expansion,
- faire tourner une paire de premières parois d'opposition (7) contre ladite armoire frigorifique (2) pour exercer depuis l'extérieur sur ladite armoire frigorifique (2) à partir de deux côtés opposés une action antagoniste à l'encontre de la poussée du mélange en expansion ;
- agencer, à l'intérieur d'un poste de moussage (Fs), une paire de secondes parois d'opposition (8) supportées au-dessus par une structure (4), lesdites secondes parois d'opposition (8) étant mises en forme pour exercer depuis l'extérieur sur ladite armoire frigorifique (2), à partir de deux côtés opposés supplémentaires, une action antagoniste respective à l'encontre de la poussée du mélange en expansion ;
- transférer, par l'intermédiaire d'une unité de transport (5), ladite table de support (6) portant ladite armoire frigorifique (2) de ladite zone de chargement/déchargement (Z1) vers ledit poste de moussage (Fs),
- déplacer en translation vers le haut, par l'intermédiaire d'un dispositif de levage (9), ladite table de support (6) portant ladite armoire frigorifique (2) d'une course (S) qui est considérablement réduite par comparaison à la hauteur (H) desdites premières parois d'opposition (7) et desdites secondes parois d'opposition (8), de manière à
- mettre en butée réciproquement ladite table de support (6) avec des surfaces inférieures (10) desdites secondes parois d'opposition (8) et mettre en butée réciproquement lesdites premières parois d'opposition (7) avec un panneau d'opposition supérieur (11), de manière à définir un gabarit de moussage à l'intérieur duquel ladite armoire frigorifique (2) devant être soumise à un moussage est enfermée.
- distribuer le mélange réactif à l'intérieur des parois creuses (3) de ladite armoire frigorifique (2) par l'intermédiaire d'une ou plusieurs têtes de mélange (50) qui sont positionnables et mobiles de manière programmée.

18. Procédé selon la revendication précédente, dans lequel, avant une distribution du mélange réactif, la position desdites premières (7) parois d'opposition sur ladite table de support (6) est ajustée, et la distance réciproque desdites secondes parois d'opposition (8) est ajustée, pour s'adapter aux dimensions de ladite armoire frigorifique (2), et dans lequel, par l'intermédiaire d'un dispositif de retrait (28), ledit panneau d'opposition supérieur (11) est retiré et transféré dudit poste de moussage (Fs) vers une zone extérieure (Z2) pour faciliter un accès à, et permettre d'éventuels ajustements/remplacements sur ledit panneau d'opposition supérieur (11).

19. Procédé selon la revendication précédente, dans lequel par l'intermédiaire de moyens de préhension (32) prévus sur ledit panneau d'opposition supérieur (11) et par l'intermédiaire dudit dispositif de retrait (28), une partie de coque extérieure de ladite armoire frigorifique (2) est saisie, qui agit comme le dossier arrière (51) pour le réfrigérateur et est séparé de ladite armoire frigorifique (2) pour être acheminé vers ladite zone extérieure (Z2), de manière à laisser ladite armoire frigorifique (2) ouverte au niveau du haut.

20. Procédé selon la revendication précédente, dans lequel après le retrait dudit dossier arrière (51) à partir de ladite armoire frigorifique (2), est prévu - par l'intermédiaire desdites une ou plusieurs têtes de mélange (50) positionnées et déplacées de manière programmée dans une région supérieure dudit poste de moussage (Fs) - une distribution au-dessus d'une manière synchronisée d'un ou plusieurs écoulement de mélange réactif à l'intérieur de l'armoire frigorifique (2) agencée dans la position face vers le bas de manière à effectuer un moussage en moule ouvert dans la configuration face vers le bas, et dans lequel, par l'intermédiaire d'une unité de commande (Uc), lesdites une ou plusieurs têtes de mélange (50) sont déplacées, supportées par des dispositifs de déplacement de chariot selon deux axes horizontaux (X) et (Y) par interpolation et un axe vertical (Z) ou par un robot anthropomorphe, de manière programmée par interpolation dans l'espace.

21. Procédé selon la revendication 20, dans lequel, pour lesdites une ou plusieurs têtes de mélange (50), les positions relatives et les vitesses interpolées sont programmées par ladite unité de commande (U_{C}) de manière à couvrir avec le déplacement desdites têtes (50) toute la surface supérieure ou le côté arrière de ladite armoire frigorifique (2) et à commander et synchroniser les étapes de distribution de démarrage et d'arrêt et les débits d'écoulement de distribution du mélange réactif en fonction des positions spécifiques atteintes progressivement par lesdites une ou plusieurs têtes de mélange (50).

22. Procédé selon la revendication 20 ou 21, dans lequel la position et le déplacement desdites une ou plusieurs têtes de mélange (50) sont programmés pour démarrer une première étape de distribution plus près de la section extérieure (Z2) (opposée à la section d'entrée Z1) et pour poursuivre et terminer la distribution en déplaçant ladite ou lesdites têtes de mélange (50) vers la section d'entrée dans ledit poste de moussage (Fs) pour ladite armoire frigorifique (2) tandis que l'entraînement programmé dudit dispositif de retrait (28) est simultanément fourni afin de refermer progressivement ladite armoire frigorifique (2) avec le dossier (51) supporté par ledit panneau d'opposition supérieur (11) de manière synchronisée, suivant le déplacement desdites une ou plusieurs têtes de mélange (50), déplaçant progressivement ledit dossier (51) pour couvrir les zones qui ont déjà été atteintes par la distribution de mélange réactif dans l'étape d'expansion.

23. Procédé selon la revendication 17 ou 18, dans lequel, par lesdites une ou plusieurs têtes de mélange (50) installées sur des supports qui sont mobiles et positionnables de manière programmée au-dessus dans ledit poste de moussage (Fs), une étape d'injection est effectuée consistant à injecter le mélange réactif pour un moussage face vers le bas de l'armoire frigorifique (2), dans lequel ladite étape d'injection se produit dans une configuration de moule fermé et il est prévu d'introduire le ou les conduits de distribution de ladite une ou plusieurs têtes de mélange (50) dans des ouvertures d'injection obtenues sur ledit panneau d'opposition supérieur (11) et dans des trous d'injection correspondants ménagés sur la partie de coque extérieure qui sert de dossier arrière (51) pour le réfrigérateur, de manière à permettre au mélange réactif de moule fermé d'être distribué ou injecté à l'intérieur de l'armoire frigorifique (2) placée dans une position face vers le bas.

24. Procédé selon la revendication précédente, dans lequel pour un moussage en moule fermé, dans ledit gabarit de moussage, à l'état fermé, un certain degré de vide est généré par aspiration d'air pour effectuer un moussage sous vide de ladite armoire frigorifique (2).
